(19) Europäisches Patentamt
European Patent Office
Office européen des brevets

(11) **EP 3 795 622 B1**

(12) **EUROPEAN PATENT SPECIFICATION**

(45) Date of publication and mention
of the grant of the patent:
**17.12.2025  Bulletin 2025/51**

(21) Application number: **19803347.4**

(22) Date of filing: **09.05.2019**

(51) International Patent Classification (IPC):
*C08J 9/18* (2006.01)    *B29C 44/00* (2006.01)
*C08F 210/06* (2006.01)

(52) Cooperative Patent Classification (CPC):
(C-Sets available)
**C08J 9/122; B29C 44/3461; C08F 210/06;**
**C08J 9/0061; C08J 9/18; C08J 9/232;**
B29K 2023/12; C08J 2203/06; C08J 2323/14;
C08J 2323/16; C08J 2423/14; C08J 2423/22
(Cont.)

(86) International application number:
**PCT/JP2019/018497**

(87) International publication number:
**WO 2019/220994 (21.11.2019 Gazette 2019/47)**

(54) **POLYPROPYLENE RESIN FOAM PARTICLES, POLYPROPYLENE RESIN IN-MOLD FOAM MOLDED BODY, AND METHOD FOR PRODUCING POLYPROPYLENE RESIN FOAM PARTICLES**

POLYPROPYLENHARZ-SCHAUMSTOFFTEILCHEN, IN-MOLD-POLYPROPYLENHARZ-SCHAUMSTOFFFORMKÖRPER UND VERFAHREN ZUR HERSTELLUNG VON POLYPROPYLENHARZ-SCHAUMSTOFFTEILCHEN

PARTICULES EXPANSÉES EN RÉSINE DE POLYPROPYLÈNE, CORPS EN RÉSINE DE POLYPROPYLÈNE MOULÉ PAR EXPANSION DANS LE MOULE, ET PROCÉDÉ DE PRODUCTION DE PARTICULES EXPANSÉES EN RÉSINE DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2018  JP 2018094085**

(43) Date of publication of application:
**24.03.2021  Bulletin 2021/12**

(73) Proprietors:
• **Kaneka Corporation**
**Osaka-shi, Osaka 530-8288 (JP)**
• **Kaneka Belgium N.V.**
**2260 Westerlo-Oevel (BE)**

(72) Inventor: **NAKAYAMA, Kiyotaka**
**Westerlo-Oevel B2260 (BE)**

(74) Representative: **Vossius & Partner**
**Patentanwälte Rechtsanwälte mbB**
**Siebertstrasse 3**
**81675 München (DE)**

(56) References cited:
WO-A1-2016/060162    WO-A1-2016/147919
WO-A1-2017/030124    WO-A1-2018/025916
JP-A- 2005 298 769    JP-A- 2008 106 150
JP-A- 2009 280 783    US-A1- 2008 153 933
US-A1- 2015 284 526    US-A1- 2017 218 158
US-A1- 2018 142 074

(52) Cooperative Patent Classification (CPC): (Cont.)

C-Sets
C08F 210/06, C08F 210/08, C08F 210/16,
C08F 2500/12, C08F 2500/34, C08F 2500/27,
C08F 2500/36;
C08F 210/06, C08F 210/16, C08F 2500/12,
C08F 2500/34, C08F 2500/27

# EP 3 795 622 B1

## Description

Technical Field

The present invention relates to polypropylene-based resin expanded particles, a polypropylene-based resin in-mold foamed molded product, and a method of producing polypropylene-based resin expanded particles.

Background Art

A polypropylene-based resin in-mold foamed molded product, which is obtained from polypropylene-based resin expanded particles made of a polypropylene-based resin, has characteristics such as being formable into any shape, lightweight, and heat insulating, which are advantages of an in-mold foamed molded product. Furthermore, the polypropylene-based resin in-mold foamed molded product is superior in chemical resistance, heat resistance, strain recovery rate after compression, and the like to a polystyrene-based resin in-mold foamed molded product obtained from polystyrene-based resin expanded particles. The polypropylene-based resin in-mold foamed molded product is superior in dimension accuracy, heat resistance, compressive strength, and the like to a polyethylene-based resin in-mold foamed molded product obtained from polyethylene-based resin expanded particles.

Polypropylene-based resin in-mold foamed molded products, with such characteristics, have been used in various applications such as not only automotive interior materials and automotive bumper core materials but also heat insulating materials, shock-absorbing packing materials, and returnable containers (Patent Literature 1).

Particularly in recent years, the amount of the polypropylene-based resin in-mold foamed molded product used per car has been increasing in order to reduce the weight of the car. Therefore, there is an increasing demand for polypropylene-based resin expanded particles which achieve good production efficiency in the process of in-mold foam molding.

Specifically, there is a demand for polypropylene-based resin expanded particles which achieve good surface property and fusibility even if a production cycle in the process of molding (also referred to as "mold cycle") is short (that is, even if heating time and cooling time are short), as compared to existing polypropylene-based resin expanded particles. In terms of molding cost, there is also a demand for polypropylene-based resin expanded particles which require only a small amount of steam for heating in the process of molding. Furthermore, because a polypropylene-based resin in-mold foamed molded product for automotive applications is used as a shock absorber in many cases, there is a demand for a compressive strength of a certain level or higher.

As disclosed in Patent Literatures 2 to 9, various efforts have been made to meet such demands. Patent Literatures 10 to 12 disclose polypropylene-based resin expanded particles containing a polypropylene random copolymer.

Citation List

[Patent Literature]

[Patent Literature 1]
Japanese Patent Application Publication, Tokukai, No. 2013-155386
[Patent Literature 2]
Japanese Patent Application Publication, Tokukai, No. 2004-300179
[Patent Literature 3]
PCT International Publication No. WO2006/054727
[Patent Literature 4]
PCT International Publication No. WO2008/139822
[Patent Literature 5]
PCT International Publication No. WO2009/051035
[Patent Literature 6]
PCT International Publication No. WO2009/001626
[Patent Literature 7]
Japanese Patent Application Publication, Tokukai, No. 2010-144078
[Patent Literature 8]
PCT International Publication No. WO2016-060162
[Patent Literature 9]

PCT International Publication No. WO2016-147919 [Patent Literature 10] WO 2017/030124 A1
[Patent Literature 11] US 2015/284526 A1
[Patent Literature 12] US2008/153933 A1

## Summary of Invention

Technical Problem

The foregoing conventional techniques, however, still have some room for improvement in terms of reducing the amount of steam used and reducing the production cycle.

There has been no disclosure of a polypropylene-based resin in-mold foamed molded product that can achieve both a reduction in the amount of steam used and a reduction in production cycle while maintaining good surface property, good fusibility, and good compressive strength. Also, there has been no disclosure of a method of producing such a polypropylene-based resin in-mold foamed molded product.

An object of an embodiment of the present invention is to provide polypropylene-based resin expanded particles which (i) can achieve a reduction in production cycle and a reduction in the amount of steam used when forming a polypropylene-based resin in-mold foamed molded product by molding and (ii) can be molded to form a polypropylene-based resin in-mold foamed molded product that has good surface property and good fusibility and has a compressive strength of a certain level or higher.

Solution to Problem

As a result of diligent research in view of the above objects, the inventors of the present invention have made the following finding. Specifically, when the polypropylene-based resin expanded particles described below are used in in-mold foam molding, both a reduction in the amount of steam used and a reduction in mold cycle can be achieved in the process of molding, and the resulting polypropylene-based resin in-mold foamed molded product has surface property, fusibility, and compressive strength which are equivalent to those of conventional polypropylene-based resin in-mold foamed molded products. Specifically, the polypropylene-based resin expanded particles are as follows: polypropylene-based resin expanded particles are obtained by expanding polypropylene-based resin particles which contain, in its structure, a structural unit composed of 1-butene as a comonomer and which have a specific MFR and a specific melting point; and two melting peak temperatures of the polypropylene-based resin expanded particles found by differential scanning calorimetry are controlled to respective specific temperatures, the polypropylene-based resin expanded particles have a proper high-temperature heat quantity ratio depending on the bulk density of expanded particles, and the melting point of the polypropylene-based resin particles and the temperature at the low-temperature-side peak of expanded particles obtained from those resin particles are controlled to fall within certain ranges. On the basis of this finding, the inventors of the present invention accomplished the present invention.

Specifically, polypropylene-based resin expanded particles in accordance with an embodiment of the present invention are polypropylene-based resin expanded particles obtained by expanding polypropylene-based resin particles, in which: the polypropylene-based resin particles satisfy the following conditions (A), (B), and (C); and the polypropylene-based resin expanded particles satisfy the following conditions (a) and (b).

(A) 100 weight% of the polypropylene-based resin particles contain, as a comonomer, a structural unit composed of 1-butene in an amount of not less than 0.1 weight% and less than 3 weight%.

(B) The polypropylene-based resin particles have a melt flow rate of not less than 5 g/10minutes and not more than 10 g/10minutes.

(C) The polypropylene-based resin particles have a melting point of not lower than 146.5°C and not higher than 149.4°C.

(a) In differential scanning calorimetry of the polypropylene-based resin expanded particles, a DSC curve, obtained during a first temperature rise in which a temperature of the polypropylene-based resin expanded particles is raised from 40°C to 220°C at a rate of 10 °C/minute, shows two peaks consisting of a low-temperature-side peak and a high-temperature-side peak, a temperature at the low-temperature-side peak is not lower than 141.5°C and not higher than 145.5°C, and a temperature at the high-temperature-side peak is not lower than 161.5°C and not higher than 165°C.

(b) In the differential scanning calorimetry of the polypropylene-based resin expanded particles,

a high-temperature heat quantity ratio found from the following equation (1) is

not less than 23% and not more than 35% when the polypropylene-based resin expanded particles have a bulk density of not less than 10 g/L and less than 35 g/L,
not less than 21% and not more than 33% when the polypropylene-based resin expanded particles have a bulk density of not less than 35 g/L and less than 80 g/L, and
not less than 17% and not more than 30% when the polypropylene-based resin expanded particles have a bulk density of not less than 80 g/L and less than 300 g/L:

High-temperature heat quantity ratio = {Qh/(Ql+Qh)} $\times$ 100 (%)  Equation (1),

where Ql is a low-temperature-side melting heat quantity found from the DSC curve obtained during the first temperature rise, and Qh is a high-temperature-side melting heat quantity found from the DSC curve,
wherein 100 weight% of the polypropylene-based resin particles contain a propylene/ethylene/1-butene random copolymer in an amount of not less than 10 weight% and not more than 35 weight%.

A method of producing polypropylene-based resin expanded particles in accordance with an embodiment of the present invention is a method of producing polypropylene-based resin expanded particles, including the steps of:

1) placing polypropylene-based resin particles, water, and an inorganic gas blowing agent in a pressure-resistant vessel; and
2) while stirring materials in the pressure-resistant vessel, (i) raising a temperature inside the pressure-resistant vessel to an expansion temperature and raising a pressure inside the pressure-resistant vessel to an expansion pressure and then (ii) releasing a dispersion slurry containing the polypropylene-based resin particles into an area having a pressure lower than the expansion pressure,

in which the polypropylene-based resin particles satisfy the following (a) to (c):

(a) 100 weight% of the polypropylene-based resin particles contain, as a comonomer, a structural unit derived from 1-butene in an amount of not less than 0.1 weight% and less than 3 weight%;
(b) the polypropylene-based resin particles have an MFR of not less than 5 g/10minutes and not more than 10 g/ 10minutes; and
(c) the polypropylene-based resin particles have a melting point of not lower than 146.5°C and not higher than 149.4°C, and

in which, in step 2),

a retention time from when the temperature inside the pressure-resistant vessel reaches a temperature 2°C below the expansion temperature to when the dispersion slurry starts being released into the area having a pressure lower than the expansion pressure after the temperature inside the pressure-resistant vessel is raised to the expansion temperature is not less than 5 minutes and not more than 120 minutes,
the expansion temperature is not lower than 149°C and not higher than 158°C, and
the expansion pressure is not lower than 1.0 MPa·G and not higher than 3.5 MPa·G,

wherein 100 weight% of the polypropylene-based resin particles contain a propylene/ethylene/1-butene random copolymer in an amount of not less than 10 weight% and not more than 35 weight%.

Advantageous Effects of Invention

With use of polypropylene-based resin expanded particles in accordance with an embodiment of the present invention, it is possible to (i) achieve both a reduction in the amount of steam used and a reduction in mold cycle when producing a polypropylene-based resin in-mold foamed molded product by molding and (ii) form an in-mold foamed molded product that has good surface property, good fusibility, and good compressive strength.

Brief Description of Drawings

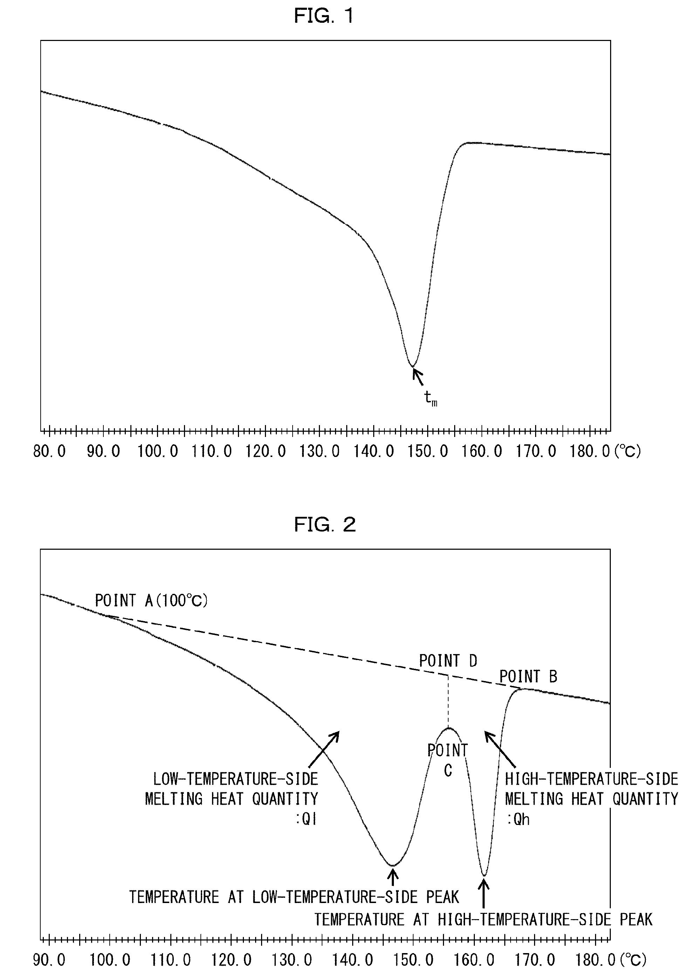

Fig. 1 shows an example of one of DSC curves obtained by differential scanning calorimetry (DSC) carried out on polypropylene-based resin particles in accordance with an embodiment of the present invention, in which the temperature of the polypropylene-based resin particles is raised from 40°C to 220°C at a rate of 10°C/minute and thereafter lowered from 220°C to 40°C at a rate of 10°C/minute and again raised from 40°C to 220°C at a rate of 10°C/min. The DSC curve in Fig. 1 is that obtained during the second temperature rise. The "$t_m$" indicates the melting point of the polypropylene-based resin expanded particles.

Fig. 2 is an example of a DSC curve obtained by differential scanning calorimetry (DSC) in which the temperature of polypropylene-based resin expanded particles in accordance with an embodiment of the present invention is raised from 40°C to 220°C at a rate of 10°C/minutes. The DSC curve has two melting peaks. Line segment A-B connects point A (heat absorption quantity at 100°C) and point B (heat absorption quantity at the temperature at which high-temperature-side melting ends). Point C is the point at which the heat absorption quantity is smallest between the following two melting heat quantity regions: the low-temperature-side melting heat quantity and the high-temperature-side melting heat quantity on the DSC curve. Point D is the intersection of the line segment A-B and a line that extends from the point C to the line segment A-B in a direction parallel to Y axis. Low-temperature-side melting heat quantity (Ql) is represented by the area enclosed by line segment A-D, line segment C-D, and the DSC curve, and high-temperature-side melting heat quantity (Qh) is represented by the area enclosed by line segment B-D, line segment C-D, and the DSC curve.

Description of Embodiments

The following description will discuss embodiments of the present invention. The present invention is not, however, limited to the embodiments below.

Any numerical range expressed as "A to B" in the present specification means "not less than A and not more than B (i.e., a range from A to B which includes both A and B)" unless otherwise stated.

Furthermore, in the present specification, a copolymer containing, as structural units, a structural unit derived from monomer $X_1$, a structural unit derived from monomer $X_2$, ... , and a structural unit derived from monomer $X_n$ (where n is an integer of 2 or more) may be referred to as "$X_1$-$X_2$- ... -$X_n$ copolymer", unless otherwise stated. Such a $X_1$-$X_2$- ... -$X_n$ copolymer is not particularly limited as to the manner in which the structural units thereof are arranged, unless otherwise stated. The $X_1$-$X_2$-... -$X_n$ copolymer may be a random copolymer, a block copolymer, or a graft copolymer. Note that "$X_1$-$X_2$- ... -$X_n$ copolymer" may be referred to as "$X_1$/$X_2$/ ... /$X_n$ copolymer".

Polypropylene-based resin expanded particles in accordance with an embodiment of the present invention are polypropylene-based resin expanded particles obtained by expanding polypropylene-based resin particles, in which:

the polypropylene-based resin particles satisfy the following conditions (A), (B), and (C); and

the polypropylene-based resin expanded particles satisfy the following conditions (a) and (b).

(A) 100 weight% of the polypropylene-based resin particles contain, as a comonomer, a structural unit composed of 1-butene in an amount of not less than 0.1 weight% and less than 3 weight%.

(B) The polypropylene-based resin particles have a melt flow rate of not less than 5 g/10minutes and not more than 10 g/10minutes.

(C) The polypropylene-based resin particles have a melting point of not lower than 146.5°C and not higher than 149.4°C.

(a) In differential scanning calorimetry of the polypropylene-based resin expanded particles, a DSC curve, obtained during the first temperature rise in which the temperature of the polypropylene-based resin expanded particles is raised from 40°C to 220°C at a rate of 10 °C/minute, shows two peaks consisting of a low-temperature-side peak and a high-temperature-side peak, the temperature at the low-temperature-side peak is not lower than 141.5°C and not higher than 145.5°C, and the temperature at the high-temperature-side peak is not lower than 161.5°C and not higher than 165°C.

(b) In the differential scanning calorimetry of the polypropylene-based resin expanded particles,

a high-temperature heat quantity ratio found from the following equation (1) is

not less than 23% and not more than 35% when the polypropylene-based resin expanded particles have a bulk density of not less than 10 g/L and less than 35 g/L,
not less than 21% and not more than 33% when the polypropylene-based resin expanded particles have a bulk density of not less than 35 g/L and less than 80 g/L, and
not less than 17% and not more than 30% when the polypropylene-based resin expanded particles have a bulk density of not less than 80 g/L and less than 300 g/L:

$$\text{High-temperature heat quantity ratio} = \{Qh/\{(Ql+Qh)\} \times 100 \ (\%) \qquad \text{Equation (1)},$$

where Ql is a low-temperature-side melting heat quantity found from the DSC curve obtained during the first temperature rise, and Qh is a high-temperature-side melting heat quantity found from the DSC curve.

The polypropylene-based resin particles contain a polypropylene-based resin as a base material resin. The polypropylene-based resin in accordance with an embodiment of the present invention essentially contains a polypropylene which has 1-butene copolymerized therein.

In the present specification, the term "base material resin" in polypropylene-based resin particles refers to a resin that accounts for 50 weight% or more of 100 weight% of a resin contained in the polypropylene-based resin particles. In the present specification, the term "resin contained in polypropylene-based resin particles" refers to (i) a polypropylene-based resin contained in the polypropylene-based resin particles and (ii) thermoplastic resin and elastomer which can be contained in the polypropylene-based resin particles and which are other than the polypropylene-based resin. The polypropylene-based resin particles contain a polypropylene-based resin in an amount of not less than 50 weight%, preferably not less than 60 weight%, more preferably not less than 70 weight%, even more preferably not less than 80 weight%, particularly preferably not less than 90 weight%, with respect to 100 weight of a resin contained in the polypropylene-based resin particles.

In an embodiment of the present invention, the polypropylene-based resin which has 1-butene copolymerized therein may contain a structural unit(s) composed of some other comonomer(s) copolymerizable with the polypropylene-based resin, provided that the polypropylene-based resin contains a structural unit composed of 1-butene as a comonomer. The polypropylene-based resin may contain, as such other comonomer(s), for example, ethylene or at least one selected from C4 to C12 $\alpha$-olefins such as 1-pentene, 1-hexene, and 4-methyl-1-butene. Such other comonomer is preferably ethylene. One of such other comonomers may be copolymerized in the polypropylene-based resin alone or two or more of such other comonomers may be copolymerized in the polypropylene-based resin in combination.

In an embodiment of the present invention, the polypropylene-based resin may be (i) a single type of polypropylene-based resin or (ii) a mixture of two or more types of polypropylene-based resins (including a polypropylene-based resin containing a structural unit composed of 1-butene and a polypropylene-based resin not containing a structural unit composed of 1-butene), provided that the polypropylene-based resin contains a structural unit composed of 1-butene. Examples of the polypropylene-based resin not containing a structural unit composed of 1-butene include polypropylene homopolymers, ethylene-propylene random copolymers, ethylene-propylene block copolymers, and polypropylene-based resins containing as a comonomer an $\alpha$-olefin other than 1-butene. The polypropylene-based resin may contain some other thermoplastic resin, provided that effects in accordance with an embodiment of the present invention are not impaired.

It is preferable to use a mixture of two or more types of polypropylene-based resins. Such an arrangement is advantageous in that the amount of the structural unit composed of 1-butene in the polypropylene-based resin particles, melt flow rate (MFR) of the polypropylene-based resin particles, and melting point of the polypropylene-based resin particles can be easily adjusted and that two peak temperatures found in differential scanning calorimetry of polypropylene-based resin expanded particles (which may be referred to as "expanded particles" for short) can be easily controlled to fall within predetermined ranges.

The mixture of two or more types of polypropylene-based resins may be a mixture of (i) a polypropylene-based resin containing a structural unit composed of 1-butene and (ii) one or more polypropylene-based resins containing an $\alpha$-olefin as a copolymer, such as a polypropylene homopolymer and/or an ethylene-propylene random copolymer. Specific examples of a combination include: a combination of a propylene-1-butene random copolymer and a polypropylene homopolymer; a combination of a propylene-1-butene random copolymer and an ethylene-propylene random copolymer; a combination of a propylene-1-butene random copolymer and an ethylene-propylene block copolymer; a combination of an ethylene-propylene-1-butene random copolymer and a polypropylene homopolymer; a combination of an ethylene-propylene-1-butene random copolymer and an ethylene-propylene random copolymer; and a combination of an ethylene-propylene-1-butene random copolymer and an ethylene-propylene block copolymer.

Note that the ethylene-propylene-1-butene random copolymer is the one in which structural units composed of ethylene, structural units composed of propylene, and structural units composed of 1-butene are located randomly (in random order), and not the one in which ethylene, propylene, 1-butene are located in the order named. Therefore, the "ethylene-propylene-1-butene random copolymer" may be expressed as "propyleneethylene-1-butene random copolymer" or "propylene/ethylene/1-butene random copolymer".

In a case where a mixture of two or more types of polypropylene-based resins is used, at least one type of polypropylene-based resin in the mixture is preferably an ethylene-propylene-1-butene random copolymer, in terms of achieving a compressive strength of a certain level or higher.

In other words, in the present invention, the polypropylene-based resin particles contain a propylene/ethylene/1-butene random copolymer.

The mixing ratio between a polypropylene-based resin and the ethylene-propylene-1-butene random copolymer is not particularly limited. It is preferable to mix the polypropylene-based resin in an amount of not less than 65 weight% and not more than 90 weight% and the ethylene-propylene-1-butene random copolymer in an amount of not less than 10 weight% and not more than 35 weight%, because such a mixing ratio makes it easy to reduce a mold cycle during in-mold foam molding and makes it possible to maintain high mechanical strength of the resulting polypropylene-based resin in-mold foamed molded product without impairing surface property, fusibility, and the like of the resulting polypropylene-based resin in-mold foamed molded product (which may be referred to as "in-mold foamed molded product" for short).

In the present invention, the amount of the propylene/ethylene/ 1-butene random copolymer in 100 weight% of the polypropylene-based resin particles is not less than 10 weight% and not more than 35 weight%.

In a case where the amount of the ethylene-propylene-1-butene random copolymer in 100 weight% of the polypropylene-based resin particles is (a) not less than 10 weight%, the effect of reducing cooling time can be easily achieved and (b) not more than 35 weight%, effects of the present invention can be easily achieved.

In an embodiment of the present invention, one or more additives may be used as necessary, which are selected from, for example, expansion nucleating agents, hydrophilic compounds, and coloring agents, and other additives such as resin stabilizers (e.g., anti-static agents, flame retardants, antioxidants, and stabilizers). Polypropylene-based resin particles may be composed of a mixture of the polypropylene-based resin and one or more of such additives.

In an embodiment of the present invention, it is preferable that an expansion nucleating agent is added to the polypropylene-based resin. The expansion nucleating agent may become expansion nuclei at the time of expansion of the polypropylene-based resin particles.

Specific examples of the expansion nucleating agent for use in an embodiment of the present invention include silica (silicon dioxide), silicates, alumina, diatomaceous earth, calcium carbonate, magnesium carbonate, calcium phosphate, feldspar apatite, and barium sulfate. Examples of silicates include talc, magnesium silicate, kaolin, halloysite, dickite, aluminum silicate, and zeolite. Such expansion nucleating agents can be used alone or in combinations of two or more.

In an embodiment of the present invention, the amount of the expansion nucleating agent contained is preferably not less than 0.005 parts by weight and not more than 2 parts by weight, more preferably not less than 0.01 parts by weight and not more than 1 part by weight, even more preferably not less than 0.01 parts by weight and not more than 0.3 parts by weight, with respect to 100 parts by weight of the polypropylene-based resin, because the expansion nucleating agent contained in such an amount is likely to achieve uniform cell diameter.

In an embodiment of the present invention, the addition of a hydrophilic compound to the polypropylene-based resin is preferred in that the addition of the hydrophilic compound is effective in increasing expansion ratio of the polypropylene-based resin expanded particles (effective in decreasing bulk density) and is effective in increasing the cell diameter of the polypropylene-based resin expanded particles.

Specific examples of a hydrophilic compound for use in an embodiment of the present invention include water-absorbing organic substances such as glycerin, polyethylene glycol, glycerin fatty acid ester, melamine, isocyanuric acid, and melamine-isocyanuric acid condensate.

In an embodiment of the present invention, the amount of the hydrophilic compound contained is preferably not less than 0.01 parts by weight and not more than 5 parts by weight, more preferably not less than 0.05 parts by weight and not more than 2 parts by weight, even more preferably not less than 0.05 parts by weight and not more than 1 part by weight, with respect to 100 parts by weight of the polypropylene-based resin.

    (a) In a case where the amount of the hydrophilic compound with respect to 100 parts by weight of the polypropylene-based resin is not less than 0.01 parts by weight, the effect of improving expansion ratio and the effect of increasing cell diameter are likely to be achieved.
    (b) In a case where the amount of the hydrophilic compound with respect to 100 parts by weight of the polypropylene-based resin is not more than 5 parts by weight, the resulting in-mold foamed molded product tends to have an improved compressive strength.

Examples of the coloring agent for use in an embodiment of the present invention include carbon black, ultramarine blue, cyanine pigment, azo pigment, quinacridone pigment cadmium yellow, chromium oxide, iron oxide, perylene pigment, and anthraquinone pigment. Such coloring agents can be used alone or in combinations of two or more.

The amount of the coloring agent contained in an embodiment of the present invention is preferably not less than 0.001 parts by weight and not more than 10 parts by weight, more preferably not less than 0.01 parts by weight and not more than 8 parts by weight, even more preferably not less than 0.01 parts by weight and not more than 6 parts by weight, with respect to 100 parts by weight of the polypropylene-based resin.

In an embodiment of the present invention, the polypropylene-based resin and the foregoing additive(s) can be mixed by, for example, a method using a blender, Banbury mixer, an extruder, or the like. The additive(s) may be added directly to the polypropylene-based resin. Alternatively, the following arrangement using a masterbatch may be employed: a masterbatch resin is prepared in advance by adding, at high concentration, the additive(s) to some other resin; and the masterbatch resin is added to the polypropylene-based resin.

The resin used in preparation of the masterbatch resin is preferably a polyolefin-based resin. It is most preferable that the resin used in preparation of the masterbatch resin is another polypropylene-based resin, because such another polypropylene-based resin is well compatible with the polypropylene-based resin which is to be mixed with the masterbatch resin.

With regard to a method of producing polypropylene-based resin expanded particles in accordance with an embodiment of the present invention, a method of producing polypropylene-based resin particles containing a base material resin (granulation step) can be carried out first, for example.

Examples of the method of producing the polypropylene-based resin particles include methods utilizing an extruder. As one specific example, the polypropylene-based resin particles can be prepared via a method involving the following steps (i) to (iv): (i) introducing a polypropylene-based resin into an extruder and melting and kneading the polypropylene-based resin to obtain a base material resin (melted and kneaded product); (ii) extruding the melted and kneaded product from a die at the end of the extruder; (iii) cooling the extruded melted and kneaded product by, for example, passing it through water, and then (iv) cutting the cooled melted and kneaded product with a cutter into particles having a desired shape such as a cylindrical shape, elliptical shape, spherical shape, cuboid shape, or rectangular parallelepiped shape. Alternatively, in step (ii), the base material resin (melted and kneaded product) may be extruded directly into water from the die, and immediately thereafter the melted and kneaded product may be cut into particles and cooled. Melting and kneading the polypropylene-based resin in this manner makes it possible to obtain a base material resin which is more uniform. Note that the following arrangement may be employed: before the polypropylene-based resin is introduced into the extruder, some other resin and/or an additive(s) such as an expansion nucleating agent, a hydrophilic compound, a coloring agent, and/or a resin stabilizer, as necessary, are blended to the polypropylene-based resin; the blend is melted and kneaded to obtain a base material resin; and the base material resin is extruded, cooled, and cut into particles having a desired shape. Alternatively, the following arrangement can be employed: the polypropylene-based resin is introduced into the extruder; an additive(s) such as an expansion nucleating agent, a hydrophilic compound, a coloring agent, and/or a resin stabilizer, as necessary, are fed into the extruder so that the additive(s) are mixed with the polypropylene-based resin while the polypropylene-based resin passes through the extruder; and the mixture is melted and kneaded in the extruder to obtain a base material resin.

The polypropylene-based resin (base material resin) particles preferably have a particle weight of not less than 0.2 mg/particle and not more than 10 mg/particle, and more preferably not less than 0.5 mg/particle and not more than 5 mg/particle.

In a case where the particle weight of the polypropylene-based resin particles is not less than 0.2 mg/particle, the polypropylene-based resin particles are easy to handle and cut. In a case where the particle weight of the polypropylene-based resin particles is not more than 10 mg/particle, it is possible to achieve good mold-filling property during the process of in-mold foam molding.

The amount of the structural unit composed of 1-butene, contained as a comonomer in 100 weight% of the polypropylene-based resin particles for use in an embodiment of the present invention, is preferably not less than 0.1 weight% and less than 3.0 weight%, more preferably not less than 0.2 weight% and less than 2.8 weight%, even more preferably not less than 0.3 weight% and not more than 2.5 weight%. In a case where the amount of the structural unit composed of 1-butene contained in 100 weight% of the polypropylene-based resin particles is less than 0.1 weight%, there tends to be difficulty in obtaining the effect of reducing cooling time, and the resulting polypropylene-based resin in-mold foamed molded product tends not to have sufficient compressive strength. In a case where the amount of the structural unit composed of 1-butene contained in 100 weight% of the polypropylene-based resin particles is not less than 3.0 weight%, the resulting polypropylene-based resin in-mold foamed molded product tends to have poor surface property. In order to achieve good surface property, it is necessary to increase the heating time when carrying out molding. This is disadvantageous in terms of the amount of steam used and in terms of mold cycle.

In the present specification, a "structural unit composed of monomer X contained as a comonomer" in a polypropylene-based resin may be referred to as "X comonomer" in the polypropylene-based resin.

A method of measuring the amount of a structural unit composed of ethylene contained as a comonomer in the polypropylene-based resin (such a structural unit is "ethylene comonomer") and the amount of a structural unit composed of 1-butene contained as a comonomer in the polypropylene-based resin (such a structural unit is "1-butene comonomer") will be described in detail in Examples. The measurement of comonomer content is, in other words, quantification of copolymer composition. Note that the measurement of comonomer content can be used not only to measure the comonomer content of a polypropylene-based resin but also to measure the comonomer content of polypropylene-based resin particles, polypropylene-based resin expanded particles, and a polypropylene-based resin foamed molded product. Therefore, the measurement of comonomer content may be carried out by analyzing polypropylene-based resin particles, polypropylene-based resin expanded particles, or a polypropylene-based resin in-mold foamed molded product.

The polypropylene-based resin particles for use in an embodiment of the present invention have a melt flow rate (MFR) of preferably not less than 5 g/10minutes and not more than 10 g/10minutes, preferably not less than 5.5 g/10minutes and not more than 9 g/10minutes, even more preferably not less than 6 g/10minutes and not more than 8.5 g/10minutes. In a case where the MFR is less than 5 g/10minutes, the resulting in-mold foamed molded product will have poor surface property. That is, the molded product will have an uneven surface, shrunk surface, or wrinkled surface. In order to achieve good surface property, it is necessary to increase heating time, making it difficult to reduce the amount of steam used. In a case where the MFR is more than 10 g/10 minutes, the mold cycle in the process of in-mold foam molding tends to become longer.

The MFR of a polypropylene-based resin or polypropylene-based resin particles in an embodiment of the present invention is measured with the use of an MFR measuring instrument under the conditions in accordance with ISO1131, i.e., under a load of 2.16 kg at 230±0.2°C. The MFR measuring instrument can be CEAST Melt Flow Tester manufactured by INSTRON.

The polypropylene-based resin particles for use in an embodiment of the present invention have a melting point $t_m$ of preferably not lower than 146.5°C and not higher than 149.4°C, more preferably not lower than 146.5°C and not higher than 149.0°C, even more preferably not lower than 146.6°C and not higher than 148.7°C, in terms of the mechanical strength of the resulting in-mold foamed molded product and the amount of steam used during in-mold foam molding. In a case where the melting point is lower than 146.5°C, it is highly likely that the mechanical strength of the resulting molded product does not satisfy a certain level. In a case where the melting point is higher than 149.4°C, it is difficult to reduce the amount of steam used.

The melting point $t_m$ of polypropylene-based resin particles is found by a known method using differential scanning calorimetry (DSC). The melting point $t_m$ is found as follows: 5 mg to 6 mg of the polypropylene-based resin particles are heated from 40°C to 220°C at a rate of 10°C/minute and thereafter cooled from 220°C to 40°C at a rate of 10°C/minute and again heated from 40°C to 220°C at a rate of 10°C/minute to obtain DSC curves; and the melting peak temperature in the DSC curve obtained during the second temperature rise is used as the melting point $t_m$. The melting point $t_m$ is indicated by "$t_m$" in Fig. 1. Note that the $t_m$ may be measured with use of polypropylene-based resin expanded particles or a polypropylene-based resin in-mold foamed molded product. The differential scanning calorimeter DSC can be a DSC822e differential scanning calorimeter manufactured by METTLER TOLEDO N.V.

When polypropylene-based resin expanded particles are produced from polypropylene-based resin particles, the polypropylene-based resin expanded particles are different in structure from the polypropylene-based resin particles but are the same in composition as the polypropylene-based resin particles. Similarly, when a polypropylene-based resin in-mold foamed molded product is produced from polypropylene-based resin expanded particles produced from polypropylene-based resin particles, the polypropylene-based resin in-mold foamed molded product is different in structure from the polypropylene-based resin expanded particles but is the same in composition as the polypropylene-based resin expanded particles. Therefore,

(i) the comonomer content, melting point, or MFR obtained by analyzing the polypropylene-based resin expanded particles or the polypropylene-based resin in-mold foamed molded product can be considered the amount of a component derived from comonomer, melting point, or MFR, respectively, of the polypropylene-based resin particles which are a raw material for the polypropylene-based resin expanded particles or the polypropylene-based resin in-mold foamed molded product, and
(ii) in a case where polypropylene-based resins of known types are contained in the foregoing polypropylene-based resin, an analysis of the polypropylene-based resin expanded particles or the polypropylene-based resin in-mold foamed molded product makes it possible to find the mixing ratio between these two or more types of polypropylene-based resins in the polypropylene-based resin contained in the polypropylene-based resin particles which are a raw material for the polypropylene-based resin expanded particles or the polypropylene-based resin in-mold foamed molded product.

The foregoing "mixing ratio between two or more types of polypropylene-based resins" is, for example, the mixing ratio between a polypropylene-based resin and an ethylene-propylene-1-butene random copolymer, or the like.

In the present specification, the melting point of polypropylene-based resin expanded particles or of a polypropylene-based resin in-mold foamed molded product is the melting point measured by the same method (DSC) as the method of measuring the melting point of a polypropylene-based resin (X), except that the polypropylene-based resin expanded particles or the polypropylene-based resin in-mold foamed molded product is used instead of polypropylene-based resin particles.

The MFR of polypropylene-based resin expanded particles can be measured by a method involving the following steps: (A1) gently placing the polypropylene-based resin expanded particles in an oven (whose pressure can be reduced) such that the polypropylene-based resin expanded particles do not contact with each other; and thereafter (A2) treating the polypropylene-based resin expanded particles under a pressure of -0.05 MPa·G to -0.10 MPa·G at a temperature 20°C to 35°C higher than the melting point of the polypropylene-based resin expanded particles for 30 minutes, thereby allowing the polypropylene-based resin expanded particles to turn back into a polypropylene-based resin while degassing the polypropylene-based resin expanded particles; and thereafter (A3) bringing the polypropylene-based resin out of the oven and allowing the polypropylene-based resin to sufficiently cool; and thereafter (A4) measuring the MFR of the polypropylene-based resin by the same method as that for polypropylene-based resin particles.

The MFR of a polypropylene-based resin in-mold foamed molded product can be measured by a method involving the following steps: (B1) pulverizing the polypropylene-based resin in-mold foamed molded product with use of a mixer or the like; and thereafter (B2) carrying out the same steps as the foregoing steps for polypropylene-based resin expanded particles (steps (A1) and (A2)), except that the pulverized polypropylene-based resin in-mold foamed molded product is used instead of the polypropylene-based resin expanded particles, thereby allowing the polypropylene-based resin in-mold foamed molded product to turn back into a polypropylene-based resin; and thereafter (B3) bringing the polypropylene-based resin out of the oven and allowing the polypropylene-based resin to sufficiently cool; and thereafter (B4) measuring the MFR of the polypropylene-based resin by the same method as that for polypropylene-based resin particles.

An aspect of polypropylene-based resin expanded particles in accordance with an embodiment of the present invention may be as follows.

Polypropylene-based resin expanded particles obtained by expanding polypropylene-based resin particles, in which:

the polypropylene-based resin expanded particles satisfy the following conditions (A), (B), and (C) and satisfy the following conditions (a) and (b):

(A) 100 weight% of the polypropylene-based resin expanded particles contain, as a comonomer, a structural unit composed of 1-butene in an amount of not less than 0.1 weight% and less than 3 weight%;
(B) the polypropylene-based resin expanded particles have a melt flow rate of not less than 5 g/10minutes and not more than 10 g/10minutes;
(C) the polypropylene-based resin expanded particles have a melting point of not lower than 146.5°C and not higher than 149.4°C;

(a) in differential scanning calorimetry of the polypropylene-based resin expanded particles, a DSC curve, obtained during the first temperature rise in which the temperature of the polypropylene-based resin expanded particles is raised from 40°C to 220°C at a rate of 10 °C/minute, shows two peaks consisting of a low-temperature-side peak and a high-temperature-side peak, the temperature at the low-temperature-side peak is not lower than 141.5°C and not higher than 145.5°C, and the temperature at the high-temperature-side peak is not lower than 161.5°C and not higher than 165°C;
(b) in the differential scanning calorimetry of the polypropylene-based resin expanded particles, a high-temperature heat quantity ratio found from the following equation (1) is

not less than 23% and not more than 35% when the polypropylene-based resin expanded particles have a bulk density of not less than 10 g/L and less than 35 g/L,
not less than 21% and not more than 33% when the polypropylene-based resin expanded particles have a bulk density of not less than 35 g/L and less than 80 g/L, and
not less than 17% and not more than 30% when the polypropylene-based resin expanded particles have a bulk density of not less than 80 g/L and less than 300 g/L:

$$\text{High-temperature heat quantity ratio} = \{Qh/(Ql+Qh)\} \times 100 \ (\%) \qquad \text{Equation (1),}$$

where Ql is a low-temperature-side melting heat quantity found from the DSC curve obtained during the first temperature rise, and Qh is a high-temperature-side melting heat quantity found from the DSC curve.

Polypropylene-based resin particles obtained in the above manner can be used to produce polypropylene-based resin expanded particles in accordance with an embodiment of the present invention.

A method of producing polypropylene-based resin expanded particles in accordance with an embodiment of the present invention includes the steps of:

1) placing polypropylene-based resin particles, water, and an inorganic gas blowing agent in a pressure-resistant vessel; and

2) while stirring materials in the pressure-resistant vessel, (i) raising the temperature inside the pressure-resistant vessel to an expansion temperature and raising the pressure inside the pressure-resistant vessel to an expansion pressure and then (ii) releasing a dispersion slurry containing the polypropylene-based resin particles into an area having a pressure lower than the expansion pressure,

in which the polypropylene-based resin particles satisfy the following (a) to (c):

(a) 100 weight% of the polypropylene-based resin particles contain, as a comonomer, a structural unit derived from 1-butene in an amount of not less than 0.1 weight% and less than 3 weight%;

(b) the polypropylene-based resin particles have an MFR of not less than 5 g/10minutes and not more than 10 g/10minutes; and

(c) the polypropylene-based resin particles have a melting point of not lower than 146.5°C and not higher than 149.4°C, and

in which, in step 2),

a retention time from when the temperature inside the pressure-resistant vessel reaches a temperature 2°C below the expansion temperature to when the dispersion slurry starts being released into the area having a pressure lower than the expansion pressure after the temperature inside the pressure-resistant vessel is raised to the expansion temperature is not less than 5 minutes and not more than 120 minutes,

the expansion temperature is not lower than 149°C and not higher than 158°C, and

the expansion pressure is not lower than 1.0 MPa·G and not higher than 3.5 MPa·G.

As used herein, the "placing" may also be referred to as "introducing", "adding", or "injecting". The "materials in the pressure-resistant vessel" may also be referred to as a "mixed slurry containing the polypropylene-based resin particles, the water, and the inorganic gas blowing agent in the pressure-resistant vessel". The "dispersion slurry" in the substep (ii) may be referred to as a "mixed slurry containing the polypropylene-based resin particles, the water, and the inorganic gas blowing agent in the pressure-resistant vessel" or "contents of the pressure-resistant vessel". There is no particular limitation on the manner in which the polypropylene-based resin particles are dispersed in the "dispersion slurry". The "retention time" may be referred to as "a period of time during which the polypropylene-based resin particles are retained in the pressure-resistant vessel". In the present specification, "G" as in the unit of pressure "Pa·G" means that the pressure is gage pressure.

The step 1) is a step of placing polypropylene-based resin particles, water, and an inorganic gas blowing agent in a pressure-resistant vessel. A method of placing the polypropylene-based resin particles, the water, and the inorganic gas blowing agent in the pressure-resistant vessel is not particularly limited. The polypropylene-based resin particles used here may be polypropylene-based resin particles obtained in the foregoing manner. The inorganic gas blowing agent is not particularly limited, and is preferably at least one blowing agent selected from carbon dioxide, nitrogen, air, and water.

In the step 2), the materials in the pressure-resistant vessel are stirred, and thereby a dispersion slurry containing the polypropylene-based resin particles, the water, and the inorganic gas blowing agent is prepared. The step 2) is a step involving, while stirring the materials or the dispersion slurry in the pressure-resistant vessel, (i) raising the temperature inside the pressure-resistant vessel to an expansion temperature and raising the pressure inside the pressure-resistant vessel to an expansion pressure and then (ii) releasing the dispersion slurry containing the polypropylene-based resin particles into an area having a pressure lower than the expansion pressure. The method as described later can be used to raise temperature and pressure and then release the dispersion slurry.

Polypropylene-based resin expanded particles in accordance with an embodiment of the present invention is preferably obtained by: placing the polypropylene-based resin particles, water, and an inorganic gas blowing agent in a pressure-resistant vessel, the polypropylene-based resin particles containing a polypropylene-based resin as a base material resin; while stirring materials in the pressure-resistant vessel, raising the temperature inside the pressure-resistant vessel to an expansion temperature and raising the pressure inside the pressure-resistant vessel to an expansion pressure and thereafter releasing a dispersion slurry containing the polypropylene-based resin particles into an area having a pressure lower than the expansion pressure.

An aspect of a method of producing polypropylene-based resin expanded particles in accordance with an embodiment of the present invention may be as follows. Specifically, polypropylene-based resin expanded particles can be obtained by the following method (1) which can involve the following steps (i) to (vii). (i) Polypropylene-based resin particles and an aqueous dispersion medium, and, as necessary, a dispersing agent and/or the like, are placed in a pressure-resistant vessel, and then the pressure-resistant vessel is vacuumized as necessary with stirring. (ii) Next, a blowing agent is added into the pressure-resistant vessel, and the amount of the blowing agent is adjusted so that the pressure inside the pressure-resistant vessel reaches a pressure not lower than 0.3 MPa·G and not higher than 2.5 MPa·G. (iii) Next, the temperature inside the pressure-resistant vessel is raised to a temperature equal to or higher than the softening temperature of polypropylene-based resin. (iv) The heating allows the pressure inside the pressure-resistant vessel to rise to a pressure not lower than about 1.0 MPa·G and not higher than about 5.0 MPa·G. (v) Optionally, (v-i) the inside of the pressure-resistant vessel is heated as necessary, and thereafter (v-ii) the blowing agent is further added into the pressure-resistant vessel at or near the expansion temperature, and thereby the pressure inside the pressure-resistant vessel is adjusted to a desired expansion pressure. (vi) Next, the expansion pressure and the expansion temperature are maintained for a certain period of time while finely adjusting the temperature inside a closed vessel so that the expansion temperature is maintained. (vii) Then, the dispersion slurry is released into an area having a pressure lower than the internal pressure of the pressure-resistant vessel.

Another preferred aspect of the method may be as follows. Specifically, polypropylene-based resin expanded particles can be obtained by the following method (2) which involves the following steps (i) to (iii). (i) Polypropylene-based resin particles and an aqueous dispersion medium, and, as necessary, a dispersing agent and/or the like, are placed in a pressure-resistant vessel. (ii) Next, the pressure-resistant vessel is vacuumized as necessary while stirring the placed materials. (iii) Then, a blowing agent is introduced into the pressure-resistant vessel while raising the temperature inside the pressure-resistant vessel to a temperature equal to or higher than the softening temperature of polypropylene-based resin.

A further preferred aspect of the method may be as follows. Specifically, polypropylene-based resin expanded particles can be obtained by the following method (3) which involves the following steps (i) to (iv). (i) Polypropylene-based resin particles and an aqueous dispersion medium, and, as necessary, a dispersing agent and/or the like, are placed in a pressure-resistant vessel. (ii) Next, the temperature inside the pressure-resistant vessel is raised to a temperature near the expansion temperature. (iii) Next, a blowing agent is introduced into the pressure-resistant vessel, the temperature inside the pressure-resistant vessel is raised to the expansion temperature, and the expansion pressure and expansion temperature are maintained for a certain period of time. (iv) Then, the dispersion slurry is released into an area having a pressure lower than the internal pressure of the pressure-resistant vessel.

Note that the expansion ratio can be adjusted by: adjusting a pressure-releasing speed during expansion by increasing the internal pressure of the pressure-resistant vessel through injecting a substance used as a blowing agent into the pressure-resistant vessel before the dispersion slurry is released into the low-pressure area; and controlling the pressure through introducing a substance used as a blowing agent into the pressure-resistant vessel also while the dispersion slurry is being released into the low-pressure area.

In an embodiment of the present invention, the pressure-resistant vessel in which polypropylene-based resin particles are dispersed is not particularly limited, provided that the pressure-resistant vessel can withstand the internal pressure and temperatures which the pressure-resistant vessel is subjected to during production of expanded particles. Possible examples of the pressure-resistant vessel include a hermetically sealable autoclave-type pressure-resistant vessel.

The aqueous dispersion medium for use in an embodiment of the present invention is preferably only water. However, it is also possible to use a dispersion medium obtained by adding methanol, ethanol, ethylene glycol, glycerin, and/or the like to water. Note that, in a case where polypropylene-based resin particles in an embodiment of the present invention contain a hydrophilic compound, it is possible to allow water in the aqueous dispersion medium to act as a blowing agent, and this makes it possible to improve expansion ratio.

Examples of the blowing agent include: saturated hydrocarbons such as propane, butane, and pentane; ethers such as dimethyl ether; alcohols such as methanol and ethanol; and inorganic gases such as air, nitrogen, carbon dioxide, and water. Of those blowing agents, inorganic gas blowing agents are preferred, and at least one blowing agent selected from carbon dioxide, nitrogen, air, and water is more preferably used, because especially such blowing agents cause no significant environmental impact and have no risk of combustion.

In a method of producing polypropylene-based resin expanded particles in accordance with an embodiment of the present invention, it is more preferable that the inorganic gas blowing agent is air or carbon dioxide. In other words, the inorganic gas blowing agent for use in producing polypropylene-based resin expanded particles in accordance with an embodiment of the present invention is more preferably air or carbon dioxide. Such an arrangement is advantageous in that environmental impact is not significant and that there is no need to make the production facility explosion-proof at a huge cost.

In an embodiment of the present invention, for the purpose of preventing polypropylene-based resin particles from agglomerating together in the aqueous dispersion medium, it is preferable that a dispersing agent and a dispersion auxiliary agent are used. The "agglomeration" may be referred to as "fusing".

Examples of the dispersing agent include inorganic-based dispersing agents such as tricalcium phosphate, trimagnesium phosphate, basic magnesium carbonate, calcium carbonate, barium sulfate, kaolin, talc, and clay. Each of such dispersing agents may be used alone, or in combinations of two or more. Examples of the dispersion auxiliary agent include: (i) anionic surfactants of carboxylate type; (ii) anionic surfactants of sulfonate type such as alkyl sulfonates, n-paraffin sulfonates, alkyl benzene sulfonates, alkyl naphthalene sulfonates, and sulfosuccinates; (iii) anionic surfactants of sulfate type such as sulfonated oil, alkyl sulfates, alkyl ether sulfates, and alkyl amide sulfates; and (iv) anionic surfactants of phosphate type such as alkyl phosphates, polyoxyethylene phosphates, and alkyl allyl ether sulfates. Each of such dispersion auxiliary agents may be used alone or in combinations of two or more.

Out of those listed above, the dispersing agent is preferably at least one dispersing agent selected from the group consisting of tricalcium phosphate, trimagnesium phosphate, barium sulfate, and kaolin. Out of those listed above, the dispersing agent is preferably one that is used in combination with a dispersion auxiliary agent which is n-paraffin sodium sulfonate or aromatic sodium sulfonate.

In an embodiment of the present invention, usually, the amount of the aqueous dispersion medium used is preferably not less than 100 parts by weight and not more than 500 parts by weight with respect to 100 parts by weight of polypropylene-based resin particles, for achieving good dispersibility of the polypropylene-based resin particles in the aqueous dispersion medium. The amounts of the dispersing agent and the dispersion auxiliary agent used are, although depending on the types of the dispersing agent and the dispersion auxiliary agent and the type and amount of the polypropylene-based resin particles used, usually preferably as follows: the amount of the dispersing agent is not less than 0.2 parts by weight and not more than 3 parts by weight with respect to 100 parts by weight of the polypropylene-based resin particles; and the amount of the dispersion auxiliary agent is not less than 0.001 parts by weight and not more than 0.1 parts by weight with respect to 100 parts by weight of the polypropylene-based resin particles.

The conditions in which expansion is carried out to produce polypropylene-based resin expanded particles which have predetermined performance differ depending on what polypropylene-based resin and blowing agent are used, what additive(s) is/are contained in the polypropylene-based resin particles, what high-temperature heat quantity ratio and bulk density are targeted, and the like, and therefore cannot be specified definitely. In a method of producing polypropylene-based resin expanded particles in an embodiment of the present invention, the temperature (expansion temperature) inside the pressure-resistant vessel when releasing the dispersion slurry from the pressure-resistant vessel is preferably not lower than 149°C and not higher than 158°C, the pressure (expansion pressure) inside the pressure-resistant vessel when releasing the dispersion slurry from the pressure-resistant vessel is preferably not lower than 1.0 MPa·G and not higher than 3.5 MPa·G, and the temperature (expansion temperature) inside the pressure-resistant vessel when releasing the dispersion slurry from the pressure-resistant vessel is more preferably not lower than 149.5°C and not higher than 157.5°C.

In a case where the expansion temperature is lower than 149°C, the high-temperature heat quantity ratio becomes too high and therefore the molded product tends to have poor surface property. In order to achieve good surface property, it is necessary to increase the heating time during which heating is carried out with steam. Therefore, the amount of steam used tends to increase. On the contrary, in a case where the expansion temperature is higher than 158°C, the high-temperature heat quantity ratio becomes too low. It follows that molding cycle becomes longer and that particles in the molded product are poorly fused, i.e., expanded particles in the molded product are not fused together sufficiently, in some cases.

In a case where the expansion pressure is lower than 1.0 MPa·G, the resulting polypropylene-based resin expanded particles may have too low an expansion ratio, and the expansion ratio may vary greatly. In a case where the expansion pressure is higher than 3.5 MPa·G, the resulting polypropylene-based resin expanded particles tend to have too small an average cell diameter, and there tends to be difficulty in obtaining a good molded product.

A process of producing polypropylene-based resin expanded particles from polypropylene-based resin particles in the foregoing manner may be referred to as a "first-step expansion process," and the polypropylene-based resin expanded particles thus obtained may be referred to as "first-step expanded particles".

Accordingly, a method of producing polypropylene-based resin expanded particles in accordance with an embodiment of the present invention can be regarded as a first-step expansion process or a method of producing first-step expanded particles.

Furthermore, polypropylene-based resin expanded particles whose expansion ratio is improved in comparison with that of first-step expanded particles can be obtained by, for example, applying an internal pressure to the obtained first-step expanded particles by impregnation of an inorganic gas (e.g. air, nitrogen, carbon dioxide) and then bringing the first-step expanded particles into contact with steam having a certain pressure.

A process of further expanding the polypropylene-based resin expanded particles and thereby obtaining polypropylene-based resin expanded particles having higher expansion ratio, in the above-described manner, may be referred to as a "second-step expansion process". The polypropylene-based resin expanded particles obtained through such a second-step expansion process may be referred to as "second-step expanded particles".

In an embodiment of the present invention, the pressure of the steam in the second-step expansion process is preferably adjusted to be not lower than 0.02 MPa·G and not higher than 0.25 MPa·G, more preferably adjusted to be not lower than 0.04 MPa·G and not higher than 0.15 MPa·G, in accordance with the expansion ratio of the second-step expanded particles.

In a case where the pressure of the steam in the second-step expansion process is not lower than 0.02 MPa·G, the expansion ratio is likely to improve. In a case where the pressure of the steam in the second-step expansion process is not higher than 0.25 MPa·G the resulting second-step expanded particles do not agglomerate, which makes it possible to subsequently subject the second-step expanded particles to in-mold foam molding.

It is desirable to adjust as appropriate the internal pressure of air impregnated in the first-step expanded particles, in consideration of the expansion ratio of the second-step expanded particles and the steam pressure of the second-step expansion process. The internal pressure of air impregnated in the first-step expanded particles is preferably not lower than 0.05 MPa·G and not higher than 0.70 MPa·G.

In a case where the internal pressure of air impregnated in the first-step expanded particles is not lower than 0.05 MPa·G, it is easy to improve the expansion ratio. In a case where the internal pressure of air impregnated in the first-step expanded particles is not higher than 0.70 MPa·G, the second-step expanded particles do not become an open-cell foam, which makes it possible to maintain the rigidity (such as compressive strength) of the in-mold foamed molded product.

The polypropylene-based resin expanded particles in accordance with an embodiment of the present invention have two melting peaks on a DSC curve obtained by differential scanning calorimetry (DSC) in which the temperature of the polypropylene-based resin expanded particles is raised at a rate of 10 °C/minutes. The polypropylene-based resin expanded particles also have two melting heat quantities (low-temperature-side melting heat quantity (Q1) and high-temperature-side melting heat quantity (Qh)) (see Fig. 2).

Polypropylene-based resin expanded particles having two melting peaks can be obtained easily by the earlier-described method for producing polypropylene-based resin expanded particles in an aqueous dispersion system, in which the temperature inside the pressure-resistant vessel during expansion (expansion temperature) is adjusted as needed to an appropriate value and the expansion temperature is maintained for a certain period of time.

Specifically, assume that polypropylene-based resin particles have a melting point of $t_m$ (°C). In a case where the blowing agent is carbon dioxide, the temperature inside the pressure-resistant vessel during expansion (expansion temperature) is preferably not lower than $t_m$-5 (°C), more preferably not lower than $t_m$-2 (°C) and not higher than $t_m$+8 (°C), even more preferably not lower than $t_m$ (°C) and $t_m$+7 (°C). In a case where the blowing agent is air, the temperature inside the pressure-resistant vessel during expansion (expansion temperature) is preferably not lower than $t_m$-2 (°C), more preferably not lower than $t_m$ (°C) and not higher than $t_m$+12 (°C), even more preferably not lower than $t_m$+2 (°C) and not higher than $t_m$+11 (°C).

In an embodiment of the present invention, the temperature at the low-temperature-side peak of the two melting peaks of the DSC curve for the polypropylene-based resin expanded particles is not lower than 141.5°C and not higher than 145.5°C, and the temperature at the high-temperature-side peak of the two melting peaks of the DSC curve is not lower than 161.5°C and not higher than 165°C.

In a case where the temperature at the low-temperature-side peak is not lower than 141.5°C, during in-mold foam molding, particles inside a molded product are not fused together instantly (in the initial stage of heating). This makes it possible for a sufficient amount of steam to pass between expanded particles, resulting in uniform heating of the expanded particles. As a result, it is possible to reduce the heating time during which heating is carried out with steam. In a case where the temperature at the low-temperature-side peak is not higher than 145.5°C, the molded product will have good surface property, making it unnecessary to increase the heating time.

In a case where the temperature at the high-temperature-side peak is not lower than 161.5°C, the resulting polypropylene-based resin foamed molded product will have a mechanical strength above a certain level in many cases. Such a temperature at the high-temperature-side peak is therefore preferred. In a case where the temperature at the high-temperature-side peak is not higher than 165°C, the resulting in-mold foamed molded product will have good fusibility and good surface property.

In an embodiment of the present invention, entire melting heat quantity (Q), the low-temperature-side melting heat quantity (Q1), and the high-temperature-side melting heat quantity (Qh) of polypropylene-based resin expanded particles are defined as follows (with reference to Fig. 2).

In the DSC curve obtained (Fig. 2), the entire melting heat quantity [Q=Q1+Qh], which is the sum of the low-temperature-side melting heat quantity (Ql) and the high-temperature-side melting heat quantity (Qh), is represented by the area enclosed by line segment A-B and the DSC curve. The line segment A-B connects point A (heat absorption quantity at 100°C) and point B (heat absorption quantity at the temperature at which high-temperature-side melting ends).

Point C is the point at which the heat absorption quantity is smallest between the following two melting heat quantity regions: the low-temperature-side melting heat quantity (Q1) and the high-temperature-side melting heat quantity (Qh), on the DSC curve. Point D is the intersection of the line segment A-B and a line that extends from the point C to the line segment A-B in a direction parallel to Y axis. The low-temperature-side melting heat quantity (Q1) is represented by the area enclosed by line segment A-D, line segment C-D, and the DSC curve, and the high-temperature-side melting heat quantity (Qh) is represented by the area enclosed by line segment B-D, the line segment C-D, and the DSC curve.

In an embodiment of the present invention, with regard to the ratio of the high-temperature-side melting heat quantity (Qh) of polypropylene-based resin expanded particles to the entire melting heat quantity of the polypropylene-based resin expanded particles, i.e., the ratio represented by [Ratio = {Qh/(Q1+Qh)}×100(%)] (hereinafter may be referred to as "high-temperature heat quantity ratio"), the appropriate range of the high-temperature heat quantity ratio differs depending on the bulk density of the polypropylene-based resin expanded particles. In a case where the bulk density is not less than 10 g/L and not more than 35 g/L, an appropriate high-temperature heat quantity ratio is not less than 23% and not more than 35%. In a case where the bulk density is not less than 35 g/L and not more than 80g/L, an appropriate high-temperature heat quantity ratio is not less than 21% and not more than 33%. In a case where the bulk density is not less than 80 g/L and not more than 300 g/L, an appropriate high-temperature heat quantity ratio is not less than 17% and not more than 30%. A high-temperature heat quantity ratio that is lower than the above-stated range is not preferred, because mold cycle tends to become longer, and, in some cases, particles inside the molded product are poorly fused, and the resulting polypropylene-based resin foamed molded product will have reduced compressive strength. In a case where the high-temperature heat quantity ratio is higher than the above-state range, the proportion of inter-particle dimples on the surface of the molded product increases. In order to obtain a polypropylene-based resin foamed molded product having good surface property, it is necessary to increase the heating time during molding. This results in an increase in amount of steam used, which is not preferred in terms of molding cost.

In a case where the high-temperature heat quantity ratio is within the above-stated range, the amount of steam used during molding can be reduced, a polypropylene-based resin in-mold foamed molded product can be obtained in a short mold cycle, and the polypropylene-based resin in-mold foamed molded product has good surface appearance, high compressive strength, and good fusibility.

The high-temperature heat quantity ratio of polypropylene-based resin expanded particles can be adjusted as appropriate by, for example, adjusting the retention time for which the temperature inside the pressure-resistant vessel is maintained at the expansion temperature (time from when the temperature inside the pressure-resistant vessel reaches a temperature 2°C below the expansion temperature to when a dispersion slurry containing polypropylene-based resin particles starts being released into the area having a pressure lower than the internal pressure of the pressure-resistant vessel after the temperature inside the pressure-resistant vessel is raised to the expansion temperature), expansion temperature (the temperature inside the pressure-resistant vessel at the point in time when the dispersion slurry starts being released into the area having a pressure lower than the internal pressure of the pressure-resistant vessel), expansion pressure (pressure inside the pressure-resistant vessel during expansion), and/or the like.

In general, the high-temperature heat quantity ratio or the heat quantity at the high-temperature-side melting peak tends to become large when the retention time is increased, expansion temperature is lowered, and/or expansion pressure is lowered. Furthermore, the temperature at the high-temperature-side peak tends to become higher as the retention time is increased. The retention time is preferably not shorter than 5 minutes and not longer than 120 minutes, more preferably not shorter than 10 minutes and not longer than 60 minutes. In a case where the retention time is too short, the high-temperature heat quantity ratio of the resulting polypropylene-based resin expanded particles may be unstable (reproducibility may decrease). In a case where the retention time is too long, production cycle may become too long.

As such, conditions to obtain a desired high-temperature heat quantity ratio can be easily found by conducting several experiments in which the retention time, the expansion temperature, and/or the expansion pressure are/is systematically changed. Note that the expansion pressure can be adjusted by adjusting the amount of a blowing agent.

Polypropylene-based resin expanded particles in accordance with an embodiment of the present invention preferably have the following feature: in differential scanning calorimetry, the difference between the melting point of polypropylene-based resin particles and the temperature at the low-temperature-side peak of the polypropylene-based resin expanded particles (i.e., [melting point of polypropylene-based resin particles] - [temperature at low-temperature-side peak of polypropylene-based resin expanded particles]) is not less than 2.5°C and less than 5.0°C. In a case where the difference is not less than 2.5°C, it is possible to achieve good surface property of the molded product, to reduce heating time, and to provide the effect of reducing the amount of steam used. In a case where the difference is less than 5.0°C, particles inside the molded product are well fused together, which makes it possible to maintain the mechanical strength of the resulting molded product.

Polypropylene-based resin expanded particles in accordance with an embodiment of the present invention preferably have the following feature: the difference between the melting point of the polypropylene-based resin expanded particles and the temperature at the low-temperature-side peak of the polypropylene-based resin expanded particles (i.e., [melting point of polypropylene-based resin expanded particles] - [temperature at low-temperature-side peak of polypropylene-based resin expanded particles]) is not less than 2.5°C and less than 5.0°C.

The bulk density of polypropylene-based resin expanded particles in accordance with an embodiment of the present invention is not particularly limited, and is preferably not less than 10 g/L and not more than 300 g/L. In a case where the bulk density is not more than 300 g/L, the expansion pressure does not become too low, making it possible to stably produce polypropylene-based resin expanded particles. In a case where the bulk density is not less than 10 g/L, it is possible to maintain the mechanical strength of the resulting polypropylene-based resin foamed molded product at a practical level.

Polypropylene-based resin expanded particles in accordance with an embodiment of the present invention have an average cell diameter of preferably not less than 100 $\mu$m and not more than 350 $\mu$m, more preferably not less than 100 $\mu$m and not more than 300 $\mu$m. In a case where the average cell diameter is within the above-stated range, the polypropylene-based resin in-mold foamed molded product has good surface appearance and also tends to have high mechanical strength.

The average cell diameter of the polypropylene-based resin expanded particles can be adjusted by adjusting the amount of the foregoing expansion nucleating agent added. The average cell diameter of the polypropylene-based resin expanded particles can also be controlled by, for example, controlling the foregoing high-temperature heat quantity ratio. In a case where the high-temperature heat quantity ratio is less than 20%, the average cell diameter tends to be large. In a case where the high-temperature heat quantity ratio is more than 40%, the average cell diameter tends to be small.

A polypropylene-based resin in-mold foamed molded product in accordance with an embodiment of the present invention is preferably obtained by molding the foregoing polypropylene-based resin expanded particles in accordance with an embodiment of the present invention. Such an arrangement makes it possible to obtain an in-mold foamed molded product having good surface property, good fusibility, and good compressive strength with use of a small amount of steam in a short production cycle.

The polypropylene-based resin expanded particles in accordance with an embodiment of the present invention can be made into a polypropylene-based resin in-mold foamed molded product by a conventionally known in-mold foam molding method.

Examples of the in-mold foam molding method that can be used include the following methods.

(i) A method by which polypropylene-based resin expanded particles are pressured with an inorganic gas such as air, nitrogen, or carbon dioxide so that the polypropylene-based resin expanded particles are impregnated with the inorganic gas and have a certain internal pressure, and thereafter the polypropylene-based resin expanded particles are filled into a mold and heated with steam to fuse together.

(ii) A method by which polypropylene-based resin expanded particles are compressed with gas pressure and are filled into a mold, and heated with steam to fuse together utilizing the recovery force of the polypropylene-based resin expanded particles.

(iii) A method by which polypropylene-based resin expanded particles are filled into a mold without performing any particular pretreatment and heated with steam to fuse together.

The density of a polypropylene-based resin in-mold foamed molded product in accordance with an embodiment of the present invention is not particularly limited, and is preferably not less than 15 g/L and not more than 350 g/L, more preferably not less than 20 g/L and not more than 300 g/L.

It is important that 50%-strained compressive strength (measured by a method in accordance with ISO844) of a polypropylene-based resin in-mold foamed molded product in accordance with an embodiment of the present invention satisfies the following expression (2):

$$50\%\text{-Strained compressive strength (kPa)} \geq 0.054 \times D^2 + 3.85 \times D + 50 \qquad \text{Expression (2)},$$

where D is the density of the polypropylene-based resin in-mold foamed molded product (the density may be referred to as "density of molded product" for short).

According to the arrangement, in particular, the polypropylene-based resin in-mold foamed molded product in accordance with an embodiment of the present invention has sufficient compressive strength, and therefore is used in applications such as automotive components (e.g., automotive interior materials, automotive bumper core materials) which are required to have high strength. In particular, in automotive applications, required compressive strength differs depending on the member in which the polypropylene-based resin in-mold foamed molded product is used. A higher 50%-strained compressive strength achieves a more reduction in the density of the in-mold foamed molded product for achieving the required compressive strength. That is, it is possible to reduce the weight of each component, and contribute to reducing the weight of an automobile and improving fuel efficiency of the automobile.

The polypropylene-based resin in-mold foamed molded product thus obtained may be used in various applications such as not only automotive interior materials and automotive bumper core materials but also heat insulating materials, shock-absorbing packing materials, and returnable containers.

The present invention is as defined in the appended claims.

Examples

The following description will discuss the present invention in more detail with Examples and Comparative Examples. Note, however, that the present invention is not limited to these Examples.

Substances used in Examples and Comparative Examples are as follows.

\<Polypropylene-based resin>

Polypropylene-based resins A-1 to A-6 and polypropylene-ethylene-1-butene random copolymers B-1 to B-4 shown in Table 1 were used. Note that the term "polypropylene-ethylene-1-butene random copolymer" refers to the "propylene / ethylene / 1-butene random copolymer" described earlier, and is expressed as "ethylene-1-butene-polypropylene copolymer" in Table 1.

[Table 1]

| | Comonomer content (weight%) | | Melting point | MFR |
|---|---|---|---|---|
| | Ethylene | 1-Butene | (°C) | (g/ 10minutes) |
| Polypropylene -based resin A-1 | 2.5 | - | 149 | 7 |
| Polypropylene -based resin A-2 | 2.7 | - | 148 | 6.5 |
| Polypropylene -based resin A-3 | 3.5 | - | 140 | 7.5 |
| Polypropylene -based resin A-4 | 2.5 | - | 152 | 7 |
| Polypropylene -based resin A-5 | 2.9 | - | 146 | 1.5 |
| Polypropylene -based resin A-6 | 3.3 | - | 148 | 11.5 |
| Ethylene-1-butene-polypropylene copolymer B-1 | 0.7 | 4.5 | 148 | 8 |
| Ethylene-1-butene-polypropylene copolymer B-2 | 2.9 | 4.3 | 136 | 6.5 |
| Ethylene-1-butene-polypropylene copolymer B-3 | 3.8 | 4.1 | 133 | 6 |
| Ethylene-1-butene-polypropylene copolymer B-4 | 4.1 | 5.3 | 134 | 6 |

\<Other additives>

- Talc: Luzenac 20M0 manufactured by IMERYS Talc
- Glycerin: Glycerine 4812 manufactured by Oleon N.V.
- Melamine: manufactured by BASF
- Carbon black: manufactured by Schulman Plastics N.V.

Note that with regard to the carbon black, a carbon black masterbatch (40% carbon MB) containing the carbon black at a concentration of 40 weight% was prepared and then the carbon black masterbatch was used. The following resin (base material resin) was used in preparing the masterbatch:
Base material resin for 40% carbon MB: polypropylene-based resin A-1

- Stabilizer etc.: TINUVIN326, IRGANOX1010, IRGAFOS168, IRGANOX PS802, IRGANOX MD1024, and Chimassorb2020, manufactured by BASF
- Polyethylene glycol: PEG#300 manufactured by Lion Corporation

Note that evaluations in Examples and Comparative Examples were carried out in the following manner.

(Measurement of melting point $t_m$ of polypropylene-based resin, polypropylene-based resin particles, or polypropylene-based resin expanded particles)

The melting point $t_m$ of a polypropylene-based resin, polypropylene-based resin particles, or polypropylene-based resin expanded particles was measured with use of a differential scanning calorimeter DSC (DSC822e differential scanning calorimeter manufactured by METTLER TOLEDO N.V.), specifically, in the following manner. (1) The temperature of 5 mg to 6 mg of a sample to be measured was raised from 40°C to 220°C at a rate of 10 °C/minute, so that resin was melted; and thereafter (2) the temperature of the sample was lowered from 220°C to 40°C at a rate of 10 °C/minute, so that the sample crystalized; and thereafter (3) the temperature of the sample was raised from 40°C to 220°C again at a rate of 10 °C/minute, thereby obtaining DSC curves. The temperature at the peak (melting peak) on the DSC curve obtained during the second temperature rise (i.e., the curve obtained during step (3) above) was determined as the melting point $t_m$ (see "$t_m$" in Fig. 1). Note that, in Fig. 2, the lower melting peak temperature is referred to as "temperature at low-temperature-side peak", and the higher melting peak temperature is referred to as "temperature at high-temperature-side peak".

(Measurement of MFR)

The MFR of a polypropylene-based resin or polypropylene-based resin particles was measured with use of a CEAST Melt Flow Tester manufactured by INSTRON under the conditions in accordance with ISO1131, i.e., under a load of 2.16 kg at $230\pm0.2$°C.

(Quantification of copolymer composition)

A polypropylene-based resin having a known ethylene comonomer content and a known 1-butene comonomer content was hot pressed in an environment of 180°C to prepare a film of about 100 $\mu$m in thickness. The prepared film was subjected to IR spectrometry, and thereby the absorbance ($I_{810}$) at 810 cm$^{-1}$ derived from propylene, the absorbance ($I_{733}$) at 733 cm$^{-1}$ derived from ethylene comonomer, and the absorbance ($I_{766}$) at 766 cm$^{-1}$ derived from 1-butene comonomer were read.

Next, the obtained results were plotted with the absorbance ratio ($I_{733}/I_{810}$) on the horizontal axis and the ethylene comonomer content on the vertical axis to obtain a calibration curve for the ethylene comonomer content. Similarly, the results were plotted with the absorbance ratio ($I_{766}/I_{810}$) on the horizontal axis and the 1-butene comonomer content on the vertical axis to obtain a calibration curve for the 1-butene comonomer content.

Next, a polypropylene-based resin having an unknown comonomer content was hot pressed to prepare a film about 100 $\mu$m in thickness, by the same method as the method of preparing a sample for use in obtaining calibration curves (i.e., by the foregoing method of preparing a film). The prepared film was subjected to IR spectrometry, and thereby $I_{810}$, $I_{733}$, and $I_{766}$ were read. The ethylene comonomer content and the 1-butene comonomer content were calculated based on the earlier-obtained calibration curves. Note that the method of preparing a sample for use in obtaining calibration curves (i.e., the foregoing method of preparing a film) can be used to form a film not only from a polypropylene-based resin but also from a polypropylene-based resin foamed molded product. Therefore, the measurement of the comonomer content (i.e., quantification of copolymer composition) may be carried out by analyzing polypropylene-based resin expanded particles or a polypropylene-based resin in-mold foamed molded product.

(Measurement of bulk density of polypropylene-based resin expanded particles)

The polypropylene-based resin expanded particles obtained in the earlier-described manner were dried at 80°C for 12 hours or more, and then allowed to stand in a room at a temperature of 23°C and a humidity of 50% for a day or more. In this way, the polypropylene-based resin expanded particles were conditioned (condition of the polypropylene-based resin expanded particles was adjusted). The expanded particles in the adjusted condition were placed in a 10 L bucket, the top was leveled off, and then the weight w (g) was measured. The bulk density was calculated using the equation "Bulk density = w/10 (g/L)".

(Average cell diameter of polypropylene-based resin expanded particles)

One of the obtained polypropylene-based resin expanded particles was cut substantially in the middle while ensuring that foam membranes (cell membranes) of the polypropylene-based resin expanded particle were not broken. The cut surface was observed and an image thereof was captured under a microscope (DSC822e manufactured by METTLER TOLEDO N.V.). On the image obtained under the microscope, a line segment representing a length of 2000 $\mu$m was drawn so as not to overlap the outer layer, the number (n) of cells on the line segment was counted, and the cell diameter was calculated using the equation "Cell Diameter = 2000/n ($\mu$m)". The same operation was performed on ten expanded particles, and the average of the cell diameters of the ten particles was used as the average cell diameter ($\mu$m) of the polypropylene-based resin expanded particles. Note that the average cell diameter may be referred to as "average cell diameter".

(Calculation of high-temperature heat quantity ratio of polypropylene-based resin expanded particles)

The high-temperature heat quantity ratio represented by [{Qhf(Ql+Qh)}×100 (%)] was measured with use of a differential scanning calorimeter (DSC822e differential scanning calorimeter manufactured by METTLER TOLEDO N.V.). The DSC curve obtained during the first temperature rise, in which the temperature of 5 mg to 6 mg of the polypropylene-based resin expanded particles was raised from 40°C to 220°C at a rate of 10 °C/minutes (see Fig. 2), was used to calculate the high-temperature heat quantity ratio.

As shown in Fig. 2, line segment A-B is drawn to connect point A (heat absorption quantity at 100°C) and point B (heat absorption quantity at the temperature at which high-temperature-side melting ends), point C is the point at which the heat absorption quantity is smallest between the following two melting heat quantity regions: the low-temperature-side melting heat quantity and the high-temperature-side melting heat quantity on the DSC curve, and point D is the intersection of the line segment A-B and a line that extends from the point C to the line segment A-B in a direction parallel to Y axis. Low-temperature-side melting heat quantity (Ql) is represented by the area enclosed by line segment A-D, line segment C-D, and the DSC curve, and high-temperature-side melting heat quantity (Qh) is represented by the area enclosed by line segment B-D, the line segment C-D, and the DSC curve.

(Evaluation of moldability)

A polyolefin foaming molding machine (manufactured by Erlenbach GmbH) was used. Polypropylene-based resin expanded particles were filled into a mold that allows obtaining a block-shape in-mold foamed molded product having a size of length 380 mm × width 380 mm × thickness 60 mm under the conditions as shown in Table 2 to 4, and the polypropylene-based resin expanded particles were heat-molded to obtain a block-shape polypropylene-based resin in-mold foamed molded product. This process was carried out in the following manner. The polypropylene-based resin expanded particles were filled into a mold and the mold was completely closed. Next, the polypropylene-based resin expanded particles in their entirety were warmed while the air in the mold was purged by use of steam of 0.15 MPa·G (preheating step), and then the polypropylene-based resin expanded particles were heat-molded with use of heated steam having a pressure as shown in Tables 2 to 4 for 6 seconds (autoclave step). In this way, the polypropylene-based resin in-mold foamed molded product was obtained. After the completion of heating, the steam inside the mold was removed, predetermined water cooling was carried out, and then air cooling was carried out until the pressure obtained using a contact pressure meter reached 0.05 MPa·G. A mold cycle is the time form when one set of molding operations starts to when the one set of molding operations ends. The time for which the water cooling was carried out, which differs depending on the particle weight (mg/particle) of polypropylene-based resin particles, was as follows.

The time for which water cooling was carried out was 50 seconds in a case where the particle weight was 0.75 mg/particle to 0.90 mg/particle.

The time for which water cooling was carried out was 60 seconds in a case where the particle weight was 1.20 mg/particle.

The time for which water cooling was carried out was 80 seconds in a case where the particle weight was 1.80 mg/particle.

The obtained polypropylene-based resin in-mold foamed molded product was aged (allowed to stand) and dried in a dryer at 80°C for 6 hours, brought back to a room-temperature environment, and then allowed to stand in a room at a temperature of 23°C and a humidity of 50% for 48 hours. Then, the polypropylene-based resin in-mold foamed molded product was evaluated for fusibility and surface property and measured for density. Measurement of 50%-strained compressive strength was carried out with use of a polypropylene-based resin in-mold foamed molded product obtained by carrying out molding under the heating condition of Level 1 shown in Table 4. Before use of the obtained polypropylene-based resin in-mold foamed molded product in the measurement, the polypropylene-based resin in-mold foamed molded product was aged (allowed to stand) and dried in a dryer at 80°C for 6 hours, brought out of the dryer, and then allowed to stand in a room at a temperature of 23°C and a humidity of 50% for 7 to 10 days.

(Evaluation of heating condition that achieves good molding)

Table 4 shows the results obtained by carrying out molding under various heating conditions (i.e., Levels 1 to 5) in Example 2 and Comparative Example 2. Furthermore, first-step expanded particles or second-step expanded particles obtained in each Example or Comparative Example were subjected to in-mold foam molding under each of the conditions of Level 1 to Level 5 shown in Table 4, thereby obtaining a polypropylene-based resin in-mold foamed molded product. If the obtained polypropylene-based resin in-mold foamed molded product was excellent both in surface property and fusibility, that corresponding level was determined as "heating condition that achieves good molding". In Tables 2 and 3, the "heating condition that achieves good molding" is evaluated based on the following criteria.

Excellent: Surface property and fusibility were excellent in cases of Levels 1 to 5.

Good: Surface property and fusibility were excellent in cases of Levels 1 to 4.

Fair: Surface property and fusibility were excellent in cases of Levels 1 to 3.

Poor: Surface property and fusibility were excellent in cases of Levels 1 and 2.

Very Poor: Surface property and fusibility were excellent only in a case of Level 1.

**-** : There were no "heating conditions that achieve good molding".

In Tables 2 and 3, the items other than the "Heating condition that achieves good molding" in the "Molding" section are the results etc. obtained by carrying out in-mold foam molding under the condition of the level as shown in the "Heating condition (See Table 4)" row.

(Evaluation of amount of steam used)

The amount of steam used was measured with use of a flowmeter attached on a steam pipe connected to the polyolefin foaming molding machine (manufactured by Erlenbach GmbH).

(Fusibility)

About 5 mm deep cut was made in the thickness direction in the obtained polypropylene-based resin in-mold foamed molded product with a cutter, and then the in-mold foamed molded product was broken along the cut. The surface resulting from the breakage was visually checked. The percentage of broken expanded particles (not the particles separated at interfaces) was calculated. Then, fusibility was judged by the following criteria.

Good: The percentage of broken expanded particles was 80% or more.

Fair: The percentage of broken expanded particles was 60% or more and less than 80%.

Poor: The percentage of broken expanded particles was less than 60% (degree of fusion was so low that the percentage of the surfaces of expanded particles appearing at the surface resulting from breakage was more than 40%).

(Surface property)

A surface, having a length of 380 mm and a width of 380 mm, of the obtained polypropylene-based resin in-mold foamed molded product was visually checked, and the surface property of the polypropylene-based resin in-mold foamed molded product was judged by the following criteria.

Good: There are few inter-particle dimples (spaces (gaps) between polypropylene-based resin expanded particles), there is no noticeable unevenness on the surface of the molded product, and there is no wrinkle or shrinkage and therefore the surface is beautiful.

Fair: There are some inter-particle dimples, there is some noticeable surface unevenness, and there is some shrinkage or wrinkles.

Poor: There are clearly noticeable inter-particle dimples, surface unevenness, shrinkage, or wrinkles on the entire surface observed.

(Density (D) of molded product)

The weight of the obtained polypropylene-based resin in-mold foamed molded product was divided by the volume of the obtained polypropylene-based resin in-mold foamed molded product to find density, and a conversion was made so that the unit was g/L.

(Density of test piece of molded product for measurement of compressive strength)

A test piece having a size of length 50 mm × width 50 mm × thickness 50 mm was cut from the central portion of a polypropylene-based resin in-mold foamed molded product obtained by carrying out molding under the heating condition of Level 1. The weight W (g) of the test piece was measured, the length, width, and thickness of the test piece were measured with the use of a caliper, and the volume V (cm$^3$) of the test piece was calculated. Then, the density of the molded product was obtained using W/V. Note, however, that a conversion was made so that the unit was g/L.

<50%-strained compressive strength>

After the density of the test piece of the molded product was measured, the compressive stress of this test piece when compressed by 50% at a rate of 5 mm (10% the thickness of the test piece) per minute was measured with use of a tension and compression testing machine (Series 5560 manufactured by INSTRON) in accordance with ISO844.

(Examples 1 to 21, Comparative Examples 1 to 10 and 12 to 35)

[Preparation of polypropylene-based resin particles]

Additives were mixed into a polypropylene-based resin as shown in Table 1 in amounts shown in Table 2 or 3. Then, the mixture was melted and kneaded (resin temperature of 215°C to 225°C) with use of a twin-screw extruder (ZSK18 manufactured by Coperion) to obtain a melted and kneaded product. The melted and kneaded product was extruded from the extruder. The extruded melted and kneaded product (strands) was cooled with water in a water tank, and then cut to obtain polypropylene-based resin particles (0.75 mg/particle to 1.80 mg/particle).

[Preparation of first-step expanded particles]

<Case where carbon dioxide is used as blowing agent>

100 parts by weight of the obtained polypropylene-based resin particles, 200 parts by weight of water, 1.5 parts by weight of tricalcium phosphate (basic) in powder form (dispersing agent), 0.06 parts by weight of n-paraffin sodium sulfonate (dispersion auxiliary agent), and 5 to 7.5 parts by weight of carbon dioxide (inorganic gas blowing agent) were placed in a 10 L pressure-resistant vessel. The temperature inside the pressure-resistant vessel was raised to a temperature 2°C below the expansion temperature as shown in Table 2 or 3 while stirring the materials in the pressure-resistant vessel. Next, after the heating of the inside of the pressure-resistant vessel had been continued for 10 minutes, carbon dioxide was further injected into the pressure-resistant vessel and the pressure inside the pressure-resistant vessel was raised, thereby adjusting the pressure to the expansion pressure as shown in Table 2 or 3. While the temperature and pressure inside the pressure-resistant vessel were maintained at the expansion temperature and the expansion pressure for 20 minutes, the contents retained in the pressure-resistant vessel were heated to the expansion temperature. Then, a valve at a lower part of the pressure-resistant vessel was opened, and the dispersion slurry containing the polypropylene-based resin particles was released into an area having a pressure lower than the expansion pressure (into atmospheric pressure) through an orifice plate having an opening diameter of 4.0 mm. In this way, polypropylene-based resin expanded particles (first-step expanded particles) were obtained.

<Case where air is used as blowing agent>

100 parts by weight of the obtained polypropylene-based resin particles, 200 parts by weight of water, 1.5 parts by weight of tricalcium phosphate (basic) in powder form (dispersing agent), and 0.06 parts by weight of n-paraffin sodium sulfonate (dispersion auxiliary agent) were placed in a 10 L pressure-resistant vessel. The temperature inside the pressure-resistant vessel was raised to a temperature 2°C below the expansion temperature as shown in Table 2 or 3 while stirring the materials in the pressure-resistant vessel. Next, after the heating of the inside of the pressure-resistant vessel had been continued for 10 minutes, air as an inorganic gas blowing agent was injected into the pressure-resistant vessel and the pressure inside the pressure-resistant vessel was raised, thereby adjusting the pressure to the expansion pressure as shown in Table 2 or 3. The temperature and pressure inside the pressure-resistant vessel were maintained at the expansion temperature and the expansion pressure for 20 minutes (the contents in the pressure-resistant vessel were retained for 20 minutes). Then, a valve at a lower part of the pressure-resistant vessel was opened, and thereby the dispersion slurry containing the polypropylene-based resin particles was released into an area having a pressure lower than the expansion pressure (into atmospheric pressure) through an orifice plate having an opening diameter of 4.0 mm. In this way, polypropylene-based resin expanded particles (first-step expanded particles) were obtained.
In each case, retention time (the time from when the temperature 2°C below the expansion temperature is reached to when the dispersion slurry starts being released into the area having a pressure lower than the expansion pressure after the temperature inside the pressure-resistant vessel is raised to the expansion temperature) was 30 minutes. The obtained first-step expanded particles were washed with 1% hydrochloric acid solution, thoroughly rinsed with water, and then dried. Then, the first-step expanded particles were measured for high-temperature heat quantity ratio, cell diameter, and bulk density. The results are shown in Tables 2 and 3.

[Preparation of second-step expanded particles]

The obtained first-step expanded particles were placed in a pressure-resistant vessel, pressure was applied to the first-step expanded particles with use of air, and the internal pressure of the first-step expanded particles was adjusted to the internal pressure as shown in Table 2 or 3. Then, the first-step expanded particles were heated at the steam pressure as shown in Table 2 or 3. In this way, second-step expanded particles were obtained.

[Preparation of polypropylene-based resin in-mold foamed molded product]

The obtained first-step expanded particles or second-step expanded particles were filled into a mold that allows obtaining a block-shape in-mold foamed molded product having a size of length 380 mm × width 380 mm × thickness 60 mm while pressure was applied with use of the compressed air pressure as shown in Table 2 or 3. Alternatively, the obtained first-step expanded particles or second-step expanded particles which had been given the internal pressure as shown in Table 2 or 3 were filled into the mold while keeping the gap in the mold as shown in Table 2 or 3. The filled expanded particles were heat-molded with use of steam, and thereby a block-shape polypropylene-based resin in-mold foamed molded product having a size of length 380 mm × width 380 mm × thickness 60 mm was obtained.

The above process was carried out in the following manner. The polypropylene-based resin expanded particles were filled into the mold, and the mold was completely closed. Then, the air in the mold was purged by use of steam of 0.15 MPa·G, and then the polypropylene-based resin expanded particles were heat-molded with use of the steam pressure as shown in Table 2 or 3 for 6 seconds (autoclave step) to obtain a polypropylene-based resin in-mold foamed molded product. The details of heating conditions (Levels 1 to 4) are shown in Table 4. Specifically, a preheating step was carried out for 2 seconds, a cross steaming step was carried out for 3 or 7 seconds, a counter cross steaming step was carried out for 3 or 7 seconds, and an autoclave step was carried out for 6 seconds as stated earlier. Molding was carried out at each heating level, and levels at which good surface property and fusibility were achieved are shown in the "Heating condition that achieves good molding" rows of Tables 2 and 3.

After the heating step, cooling was carried out with water for the period of time as shown in Tables 2 and 3 (as described earlier, the time differs depending on the particle weight of polypropylene-based resin particles), and air cooling was carried out until the surface contact pressure borne by the in-mold formed molded product reached 0.05 MPa·G. After the molding, the in-mold formed molded product was dried in a dryer at 80°C for 6 hours, then allowed to stand at 23°C for 48 hours, and evaluated for moldability.

[Table 2] (i)

| | | | | Example 1 | Example 2 | Example 3 | Example 4 | Example 5 | Example 6 | Example 7 |
|---|---|---|---|---|---|---|---|---|---|---|
| Base material resin | Resin A | A-1 | % | 80 | 80 | 80 | 80 | 85 | 70 | 70 |
| | | A-2 | % | | | | | | | |
| | | A-3 | % | | | | | | | |
| | | A-4 | % | | | | | | | |
| | | A-5 | % | | | | | | | |
| | | A-6 | % | | | | | | | |
| | Ethylene-1-butene-polypropylene copolymer | B-1 | % | | | | | | | |
| | | B-2 | % | 20 | 20 | 20 | 20 | 15 | 30 | |
| | | B-3 | % | | | | | | | 30 |
| | | B-4 | % | | | | | | | |
| Additive | | Carbon black | % | 2.5 | 2.5 | 2.5 | 2.5 | 2.5 | 2.5 | 2.5 |
| | | Glycerin | % | 0.1 | 0.1 | 0.1 | 0.1 | 0.1 | 0.1 | 0.1 |
| | | Melamine | % | | | | | | | |
| | | Polyethylene glycol | % | | | | | | | |
| | | Talc | % | 0.01 | 0.01 | 0.01 | 0.01 | 0.01 | 0.01 | 0.01 |
| | | Stabilizer | % | 0.3 | 0.3 | 0.3 | 0.3 | 0.3 | 0.3 | 0.3 |
| Polypropylene-based resin particles | | Melting point | °C | 148.1 | 148.1 | 148.1 | 148.1 | 148.7 | 147.2 | 147.1 |
| | | Particle weight | mg/ particle | 0.75 | 0.75 | 0.75 | 0.75 | 0.75 | 0.75 | 0.75 |
| | | MFR | g/10 minutes | 7.4 | 7.4 | 7.4 | 7.4 | 7.4 | 7.3 | 7.1 |
| | | 1-Butene | wt% | 0.9 | 0.9 | 0.9 | 0.9 | 0.6 | 1.3 | 1.2 |

(continued)

| | | | Example 1 | Example 2 | Example 3 | Example 4 | Example 5 | Example 6 | Example 7 |
|---|---|---|---|---|---|---|---|---|---|
| First-step expansion | Expansion condition | Expansion temperature | °C | 152.5 | 152.5 | 152.8 | 152.0 | 152.8 | 151.9 | 151.8 |
| | | Expansion pressure | MPaG | 2.8 | 2.8 | 2.7 | 3.0 | 2.8 | 2.8 | 3.0 |
| | | Blowing agent | | $CO_2$ | $CO_2$ | $CO_2$ | $CO_2$ | $CO_2$ | $CO_2$ | $CO_2$ |
| | Expanded particles | Bulk density | g/L | 32 | 32 | 33 | 34 | 32 | 32 | 32 |
| | | High-temperature heat quantity ratio | % | 27 | 27 | 24 | 32 | 27 | 27 | 27 |
| | | Temperature at low-temperature-side peak | °C | 143.8 | 143.8 | 143.6 | 143.8 | 144.2 | 142.5 | 142.2 |
| | | Temperature at high-temperature-side peak | °C | 163.3 | 163.3 | 163.2 | 163.4 | 164.8 | 162.8 | 162.9 |
| | | Melting point - temperature at low-temperature-side peak | °C | 4.3 | 4.3 | 4.5 | 4.3 | 4.5 | 4.7 | 4.9 |
| | | Average cell diameter | μm | 160 | 160 | 170 | 145 | 150 | 170 | 160 |
| | Expansion condition | Internal pressure | MPaG | - | - | - | - | - | - | - |
| | | Steam pressure | MPaG | - | - | - | - | - | - | - |
| | Expanded particles | Bulk density | g/L | - | - | - | - | - | - | - |
| | | High-temperature heat quantity ratio | % | - | - | - | - | - | - | - |
| | | Temperature at low-temperature-side peak | °C | - | - | - | - | - | - | - |
| | | Temperature at high-temperature-side peak | °C | - | - | - | - | - | - | - |
| | | Melting point - temperature at low-temperature-side peak | °C | - | - | - | - | - | - | - |
| | | Average cell diameter | μm | - | - | - | - | - | - | - |

(continued)

| | | | Example 1 | Example 2 | Example 3 | Example 4 | Example 5 | Example 6 | Example 7 |
|---|---|---|---|---|---|---|---|---|---|
| Molding | Internal pressure | MPaG | 0.10 | - | - | - | - | - | - |
| | Gap in mold | % | 5 | - | - | - | - | - | - |
| | Compressed air pressure | MPaG | - | 1.5 | 1.5 | 1.5 | 1.5 | 1.4 | 1.4 |
| | Heating condition that achieves good molding | | Excellent | Excellent | Excellent | Good | Excellent | Excellent | Good |
| | Heating condition (See Table 4) | | Level 4 | Level 4 | Level 4 | Level 4 | Level 4 | Level 4 | Level 4 |
| | Autoclave pressure | MPaG | 0.30 | 0.30 | 0.30 | 0.30 | 0.30 | 0.30 | 0.30 |
| | Density of molded product | g/L | 36 | 50 | 50 | 50 | 50 | 50 | 50 |
| | Amount of steam used | kg | 5.2 | 5.2 | 5.2 | 5.2 | 5.2 | 5.2 | 5.2 |
| | Water cooling time | Second | 50 | 50 | 50 | 50 | 50 | 50 | 50 |
| | Air cooling time (surface contact pressure cut 0.05MPa) | Second | 63 | 27 | 32 | 21 | 24 | 33 | 35 |
| | Mold cycle | Second | 172 | 136 | 141 | 130 | 133 | 142 | 144 |
| | Fusibility | | Good | Good | Good | Good | Good | Good | Good |
| | Surface property | | Good | Good | Good | Good | Good | Good | Good |
| Physical properties of molded product (Heating condition: Level 1) | Density | g/L | 35 | 49 | 49 | 50 | 49 | 49 | 49 |
| | 50%-Strained compressive strength | kPa | 265 | 389 | 380 | 397 | 392 | 381 | 376 |
| | Whether Expression 2 is satisfied | | Satisfied | Satisfied | Satisfied | Satisfied | Satisfied | Satisfied | Satisfied |
| | Value of $[0.054{\times}D^2+3.85{\times}D+50]$ | kPa | 251 | 368 | 368 | 378 | 368 | 368 | 368 |

[Table 2] (ii)

| | | | | Example 8 | Example 9 | Example 10 | Example 11 | Example 12 | Example 13 | Example 14 |
|---|---|---|---|---|---|---|---|---|---|---|
| Base material resin | Resin A | A-1 | % | 70 | 65 | 80 | 80 | 80 | 80 | 80 |
| | | A-2 | % | | | | | | | |
| | | A-3 | % | | | | | | | |
| | | A-4 | % | | | | | | | |
| | | A-5 | % | | | | | | | |
| | | A-6 | % | | | | | | | |
| | Ethylene-1-butene-polypropylene copolymer | B-1 | % | | | | | | | |
| | | B-2 | % | | 35 | 20 | 20 | 20 | 20 | 20 |
| | | B-3 | % | | | | | | | |
| | | B-4 | % | 30 | | | | | | |
| Additive | | Carbon black | % | 2.5 | 2.5 | 2.5 | 2.5 | | | |
| | | Glycerin | % | 0.1 | 0.1 | 0.1 | 0.1 | | | |
| | | Melamine | % | | | | | | | |
| | | Polyethylene glycol | % | | | | | | | |
| | | Talc | % | 0.01 | 0.01 | 0.01 | 0.01 | 0.15 | 0.15 | 0.15 |
| | | Stabilizer | % | 0.3 | 0.3 | 0.3 | 0.3 | 0.3 | 0.3 | 0.3 |
| Polypropylene-based resin particles | | Melting point | °C | 147.2 | 146.8 | 148.1 | 148.1 | 148.1 | 148.1 | 148.1 |
| | | Particle weight | particle | 0.75 | 0.75 | 0.90 | 0.90 | 0.75 | 0.75 | 0.75 |
| | | MFR | g/10 minutes | 7.1 | 7.3 | 7.4 | 7.4 | 7.4 | 7.4 | 7.4 |
| | | 1-Butene | wt% | 1.6 | 1.5 | 0.9 | 0.9 | 0.9 | 0.9 | 0.9 |

(continued)

| | | | | Example 8 | Example 9 | Example 10 | Example 11 | Example 12 | Example 13 | Example 14 |
|---|---|---|---|---|---|---|---|---|---|---|
| First-step expansion | Expansion condition | Expansion temperature | °C | 151.8 | 151.6 | 152.8 | 152.8 | 153.1 | 152.8 | 152.0 |
| | | Expansion pressure | MPaG | 3.0 | 2.8 | 2.6 | 2.6 | 2.9 | 3.0 | 3.3 |
| | | Blowing agent | | $CO_2$ | $CO_2$ | $CO_2$ | $CO_2$ | $CO_2$ | $CO_2$ | $CO_2$ |
| | Expanded particles | Bulk density | g/L | 32 | 32 | 52 | 52 | 73 | 75 | 75 |
| | | High-temperature heat quantity ratio | % | 27 | 27 | 27 | 27 | 21 | 24 | 30 |
| | | Temperature at low-temperature-side peak | °C | 142.3 | 141.9 | 143.9 | 143.9 | 143.8 | 143.7 | 143.8 |
| | | Temperature at high-temperature-side peak | °C | 162.4 | 162.3 | 163.8 | 163.8 | 163.3 | 163.2 | 163.2 |
| | | Melting point - temperature at low-temperature-side peak | °C | 4.9 | 4.9 | 4.2 | 4.2 | 4.3 | 4.4 | 4.3 |
| | | Average cell diameter | μm | 170 | 170 | 180 | 180 | 170 | 160 | 130 |
| Second-step expansion | Expansion condition | Internal pressure | MPaG | - | - | 0.40 | 0.40 | - | - | - |
| | | Steam pressure | MPaG | - | - | 0.09 | 0.09 | - | - | - |
| | Expanded particles | Bulk density | g/L | - | - | 17 | 17 | - | - | - |
| | | High-temperature heat quantity ratio | % | - | - | 27 | 27 | - | - | - |
| | | Temperature at low-temperature-side peak | °C | - | - | 144 | 144 | - | - | - |
| | | Temperature at high-temperature-side peak | °C | - | - | 163.8 | 163.8 | - | - | - |
| | | Melting point - temperature at low-temperature-side peak | °C | - | - | 4.1 | 4.1 | - | - | - |
| | | Average cell diameter | μm | - | - | 250 | 250 | - | - | - |

| | | | Example 8 | Example 9 | Example 10 | Example 11 | Example 12 | Example 13 | Example 14 |
|---|---|---|---|---|---|---|---|---|---|
| Molding | Internal pressure | MPaG | - | - | 0.10 | - | 0.06 | 0.06 | 0.06 |
| | Gap in mold | % | - | - | 5 | - | 10 | 10 | 10 |
| | Compressed air pressure | MPaG | 1.4 | 1.4 | - | 1.1 | - | - | - |
| | Heating condition that achieves good molding | | Excellent | Excellent | Excellent | Excellent | Excellent | Excellent | Good |
| | Heating condition (See Table 4) | | Level 4 | Level 4 | Level 4 | Level 4 | Level 4 | Level 4 | Level 4 |
| | Autoclave pressure | MPaG | 0.30 | 0.30 | 0.30 | 0.30 | 0.30 | 0.30 | 0.30 |
| | Density of molded product | g/L | 50 | 50 | 20 | 30 | 90 | 90 | 90 |
| | Amount of steam used | kg | 5.2 | 5.2 | 5.2 | 5.2 | 5.2 | 5.2 | 5.2 |
| | Water cooling time | Second | 50 | 50 | 50 | 50 | 50 | 50 | 50 |
| | Air cooling time (surface contact pressure cut 0.05MPa) | Second | 36 | 39 | 53 | 39 | 72 | 63 | 46 |
| | Mold cycle | Second | 145 | 148 | 162 | 148 | 181 | 172 | 155 |
| | Fusibility | | Good | Good | Good | Good | Good | Good | Good |
| | Surface property | | Good | Good | Good | Good | Good | Good | Good |
| Physical properties of molded product (Heating condition: Level 1) | Density | g/L | 49 | 49 | 19.5 | 29.5 | 85 | 88 | 88 |
| | 50%-Strained compressive strength | kPa | 377 | 376 | 152 | 224 | 796 | 845 | 858 |
| | Whether Expression 2 is satisfied | | Satisfied | Satisfied | Satisfied | Satisfied | Satisfied | Satisfied | Satisfied |
| | Value of $[0.054{\times}D^2+3.8\ 5{\times}D+50]$ | kPa | 368 | 368 | 146 | 211 | 767 | 807 | 807 |

[Table 2](iii)

| Base material resin | | | | Example 15 | Example 16 | Example 17 | Example 18 | Example 19 | Example 20 | Example 21 |
|---|---|---|---|---|---|---|---|---|---|---|
| Base material resin | Resin A | A-1 | % | 80 | 80 | 80 | 80 | | | |
| | | A-2 | % | | | | | 90 | 80 | |
| | | A-3 | % | | | | | | | |
| | | A-4 | % | | | | | | | 75 |
| | | A-5 | % | | | | | | | |
| | | A-6 | % | | | | | | | |
| | Ethylene-1-butene-polypropylene copolymer | B-1 | % | | | | | | | |
| | | B-2 | % | 20 | 20 | 20 | 20 | 10 | 20 | 25 |
| | | B-3 | % | | | | | | | |
| | | B-4 | % | | | | | | | |
| Additive | | Carbon black | % | 2.5 | 2.5 | 2.5 | 2.5 | 2.5 | 2.5 | |
| | | Glycerin | % | | | | | 0.1 | 0.1 | 0.1 |
| | | Melamine | % | 0.1 | | | | | | |
| | | Polyethylene glycol | % | | | | | | | 0.5 |
| | | Talc | % | 0.1 | 0.05 | 0.05 | 0.05 | 0.01 | 0.01 | 0.05 |
| | | Stabilizer | % | 0.3 | 0.2 | 0.2 | 0.2 | 0.3 | 0.3 | 0.2 |
| Polypropylene-based resin particles | | Melting point | °C | 148.1 | 148.1 | 148.1 | 148.1 | 147.5 | 147.2 | 149.2 |
| | | Particle weight | mg/ particle | 1.2 | 1.8 | 1.8 | 1.8 | 0.75 | 0.75 | 1.20 |
| | | MFR | g/10 minutes | 7.4 | 7.4 | 7.4 | 7.4 | 6.9 | 6.8 | 7.7 |
| | | 1-Butene | wt% | 0.9 | 0.9 | 0.9 | 0.9 | 0.4 | 0.9 | 1.1 |

| | | | | Example 15 | Example 16 | Example 17 | Example 18 | Example 19 | Example 20 | Example 21 |
|---|---|---|---|---|---|---|---|---|---|---|
| First-step expansion | Expansion condition | Expansion temperature | °C | 156.0 | 156.5 | 156.1 | 155.6 | 151.7 | 151.3 | 153.5 |
| | | Expansion pressure | MPaG | 2.6 | 1.9 | 2.1 | 2.4 | 2.8 | 2.8 | 3.5 |
| | | Blowing agent | | Air | Air | Air | Air | $CO_2$ | $CO_2$ | $CO_2$ |
| | Expanded particles | Bulk density | g/L | 58 | 107 | 110 | 115 | 32 | 32 | 26 |
| | | High-temperature heat quantity ratio | % | 23 | 18 | 22 | 27 | 27 | 27 | 25 |
| | | Temperature at low-temperature-side peak | °C | 144.0 | 144.1 | 144.0 | 144.2 | 144.1 | 143.2 | 145.0 |
| | | Temperature at high-temperature-side peak | °C | 163.9 | 164.1 | 164.2 | 164.0 | 163.8 | 162.8 | 164.8 |
| | | Melting point - temperature at low-temperature-side peak | °C | 4.1 | 4.0 | 4.1 | 3.9 | 3.4 | 4.0 | 4.2 |
| | | Average cell diameter | μm | 190 | 230 | 210 | 180 | 160 | 160 | 180 |
| Second-step expansion | Expansion condition | Internal pressure | MPaG | - | - | - | - | - | - | - |
| | | Steam pressure | MPaG | - | - | - | - | - | - | - |
| | Expanded particles | Bulk density | g/L | - | - | - | - | - | - | - |
| | | High-temperature heat quantity ratio | % | - | - | - | - | - | - | - |
| | | Temperature at low-temperature-side peak | °C | - | - | - | - | - | - | - |
| | | Temperature at high-temperature-side peak | °C | - | - | - | - | - | - | - |
| | | Melting point - temperature at low-temperature-side peak | °C | - | - | - | - | - | - | - |
| | | Average cell diameter | μm | - | - | - | - | - | - | - |

| | | | Example 15 | Example 16 | Example 17 | Example 18 | Example 19 | Example 20 | Example 21 |
|---|---|---|---|---|---|---|---|---|---|
| Molding | Internal pressure | MPaG | - | 0.05 | 0.05 | 0.05 | - | - | 0.11 |
| | Gap in mold | % | - | 20 | 20 | 20 | - | - | 10 |
| | Compressed air pressure | MPaG | 3.5 | - | - | - | 1.5 | 1.4 | - |
| | Heating condition that achieves good molding | | Good | Good | Good | Good | Good | Excellent | Excellent |
| | Heating condition (See Table 4) | | Level 4 | Level 4 | Level 4 | Level 4 | Level 4 | Level 4 | Level 4 |
| | Autoclave pressure | MPaG | 0.30 | 0.30 | 0.30 | 0.30 | 0.30 | 0.30 | 0.30 |
| | Density of molded product | g/L | 85 | 150 | 150 | 150 | 50 | 50 | 30.5 |
| | Amount of steam used | kg | 5.2 | 5.2 | 5.2 | 5.2 | 5.3 | 5.2 | 5.2 |
| | Water cooling time | Second | 60 | 80 | 80 | 80 | 50 | 50 | 60 |
| | Air cooling time (surface contact pressure cut 0.05MPa) | Second | 49 | 38 | 27 | 16 | 44 | 33 | 79 |
| | Mold cycle | Second | 168 | 187 | 176 | 165 | 153 | 142 | 198 |
| | Fusibility | | Good | Good | Good | Good | Good | Good | Good |
| | Surface property | | Good | Good | Good | Good | Good | Good | Good |
| Physical properties of molded product (Heating condition: Level 1) | Density | g/L | 83 | 146 | 146 | 146 | 49 | 49 | 30 |
| | 50%-Strained compressive strength | kPa | 765 | 1808 | 1834 | 1853 | 382 | 380 | 225 |
| | Whether Expression 2 is satisfied | | Satisfied | Satisfied | Satisfied | Satisfied | Satisfied | Satisfied | Satisfied |
| | Value of $[0.054 \times D^2 + 3.85 \times D + 50]$ | kPa | 742 | 1763 | 1763 | 1763 | 368 | 368 | 214 |

[Table 3](i)

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Base material resin | Resin A | A-1 | % | 100 | 100 | 100 | 100 | 100 | 100 | 100 |
| | | A-2 | % | | | | | | | |
| | | A-3 | % | | | | | | | |
| | | A-4 | % | | | | | | | |
| | | A-5 | % | | | | | | | |
| | | A-6 | % | | | | | | | |
| | Ethylene-1-butene-polypropylene copolymer | B-1 | % | | | | | | | |
| | | B-2 | % | | | | | | | |
| | | B-3 | % | | | | | | | |
| | | B-4 | % | | | | | | | |
| Additive | | Carbon black | % | 2.5 | 2.5 | 2.5 | 2.5 | | 2.5 | 2.5 |
| | | Glycerin | % | 0.1 | 0.1 | 0.1 | 0.1 | | | |
| | | Melamine | % | | | | | | 0.1 | |
| | | Polyethylene glycol | % | | | | | | | |
| | | Talc | % | 0.01 | 0.01 | 0.01 | 0.01 | 0.15 | 0.1 | 0.05 |
| | | Stabilizer | % | 0.3 | 0.3 | 0.3 | 0.3 | 0.3 | 0.3 | 0.2 |
| | | Melting point | °C | 149.5 | 149.5 | 149.5 | 149.5 | 149.5 | 149.5 | 149.5 |
| Polypropylene-based resin particles | | Particle weight | mg/particle | 0.75 | 0.75 | 0.90 | 0.90 | 0.75 | 1.2 | 1.8 |
| | | MFR | g/10 minutes | 7.5 | 7.5 | 7.5 | 7.5 | 7.5 | 7.5 | 7.5 |
| | | 1-Butene | wt% | 0 | 0 | 0 | 0 | 0 | 0 | 0 |

| | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| First-step expansion | Expansion condition | Expansion temperature | °C | 153.8 | 153.8 | 154.1 | 154.1 | 154.1 | 157.1 | 157.2 |
| | | Expansion pressure | MPaG | 2.8 | 2.8 | 2.6 | 2.6 | 3.0 | 2.5 | 2.1 |
| | | Blowing agent | | $CO_2$ | $CO_2$ | $CO_2$ | $CO_2$ | $CO_2$ | Air | Air |
| | Expanded particles | Bulk density | g/L | 32 | 32 | 51 | 51 | 75 | 58 | 110 |
| | | High-temperature heat quantity ratio | % | 27 | 27 | 27 | 27 | 24 | 23 | 22 |
| | | Temperature at low-temperature-side peak | °C | 146.5 | 146.5 | 146.6 | 146.6 | 146.2 | 146.5 | 146.9 |
| | | Temperature at high-temperature-side peak | °C | 166.2 | 166.2 | 166.1 | 166.1 | 166.1 | 166.3 | 166.6 |
| | | Melting point - temperature at low-temperature-side peak | °C | 3.0 | 3.0 | 2.9 | 2.9 | 3.3 | 3.0 | 2.6 |
| | | Average cell diameter | μm | 150 | 150 | 160 | 160 | 160 | 180 | 200 |
| Second-step expansion | Expansion condition | Internal pressure | MPaG | - | - | 0.40 | 0.40 | - | - | - |
| | | Steam pressure | MPaG | - | - | 0.09 | 0.09 | - | - | - |
| | Expanded particles | Bulk density | g/L | - | - | 17 | 17 | - | - | - |
| | | High-temperature heat quantity ratio | % | - | - | 27 | 27 | - | - | - |
| | | Temperature at low-temperature-side peak | °C | - | - | 146.8 | 146.8 | - | - | - |
| | | Temperature at high-temperature-side peak | °C | - | - | 166 | 166 | - | - | - |
| | | Melting point - temperature at low-temperature-side peak | °C | - | - | 2.7 | 2.7 | - | - | - |
| | | Average cell diameter | μm | - | - | 230 | 230 | - | - | - |

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Molding | Internal pressure | MPaG | 0.10 | - | 0.10 | - | 0.06 | - | 0.05 |
| | Gap in mold | % | 5 | - | 5 | - | 10 | - | 20 |
| | Compressed air pressure | MPaG | - | 1.6 | - | 1.1 | - | 3.6 | - |
| | Heating condition that achieves good molding | | Very Poor | Very Poor | Very Poor | Very Poor | Very Poor | Very Poor | Very Poor |
| | Heating condition (See Table 4) | | Level 1 | Level 1 | Level 1 | Level 1 | Level 1 | Level 1 | Level 1 |
| | Autoclave pressure | MPaG | 0.30 | 0.30 | 0.30 | 0.30 | 0.30 | 0.30 | 0.30 |
| | Density of molded product | g/L | 36 | 50 | 20 | 30 | 90 | 86 | 150 |
| | Amount of steam used | kg | 7.5 | 7.5 | 7.5 | 7.5 | 7.5 | 7.5 | 7.5 |
| | Water cooling time | Second | 50 | 50 | 50 | 50 | 50 | 60 | 80 |
| | Air cooling time (surface contact pressure cut 0.05MPa) | Second | 91 | 55 | 75 | 54 | 80 | 85 | 72 |
| | Mold cycle | Second | 208 | 172 | 192 | 171 | 197 | 212 | 229 |
| | Fusibility | | Good | Good | Good | Good | Good | Good | Good |
| | Surface property | | Good | Good | Good | Good | Good | Good | Good |
| Physical properties of molded product (Heating condition: Level 1) | Density | g/L | 35 | 49 | 19.5 | 29.5 | 88 | 84 | 146 |
| | 50%-Strained compressive strength | kPa | 269 | 395 | 155 | 229 | 856 | 787 | 1852 |
| | Whether Expression 2 is satisfied | | Satisfied | Satisfied | Satisfied | Satisfied | Satisfied | Satisfied | Satisfied |
| | Value of $[0.054 \times D^2 + 3.85 \times D + 50]$ | kPa | 251 | 368 | 146 | 211 | 807 | 754 | 1763 |

[Table 3] (ii)

| | | | Comparative Example 8 | Comparative Example 9 | Comparative Example 10 | Comparative Example 12 | Comparative Example 13 | Comparative Example 14 | Comparative Example 15 |
|---|---|---|---|---|---|---|---|---|---|
| Base material resin | Resin A | A-1 | % | | | | | | | 80 |
| | | A-2 | % | 100 | | | | | | |
| | | A-3 | % | | | | | | 100 | 20 |
| | | A-4 | % | | | | | | | |
| | | A-5 | % | | | | | | | |
| | | A-6 | % | | | | | | | |
| | Ethylene-1-butene-polypropylene copolymer | B-1 | % | | 100 | | | | | |
| | | B-2 | % | | | 100 | | | | |
| | | B-3 | % | | | | 100 | | | |
| | | B-4 | % | | | | | 100 | | |
| Additive | | Carbon black | % | 2.5 | 2.5 | 2.5 | 2.5 | 2.5 | 2.5 | 2.5 |
| | | Glycerin | % | 0.1 | 0.1 | 0.1 | 0.1 | 0.1 | 0.1 | 0.1 |
| | | Melamine | % | | | | | | | |
| | | Polyethylene glycol | % | | | | | | | |
| | | Talc | % | 0.01 | 0.01 | 0.01 | 0.01 | 0.01 | 0.01 | 0.01 |
| | | Stabilizer | % | 0.3 | 0.3 | 0.3 | 0.3 | 0.3 | 0.3 | 0.3 |
| Polypropylene-based resin particles | | Melting point | °C | 148.1 | 148.3 | 136.1 | 133.1 | 134.5 | 140.3 | 148.3 |
| | | Particle weight | mg/ particle | 0.75 | 0.75 | 0.75 | 0.75 | 0.75 | 0.75 | 0.75 |
| | | MFR | g/10 minutes | 6.7 | 8.2 | 7.0 | 6.1 | 6.0 | 7.7 | 7.5 |
| | | 1-Butene | wt% | 0 | 4.5 | 4.3 | 4.1 | 5.3 | 0 | 0 |

| | | | | Comparative Example 8 | Comparative Example 9 | Comparative Example 10 | Comparative Example 12 | Comparative Example 13 | Comparative Example 14 | Comparative Example 15 |
|---|---|---|---|---|---|---|---|---|---|---|
| First-step expansion | Expansion condition | Expansion temperature | °C | 152.2 | 152.5 | 139.6 | 136.5 | 138.1 | 144.2 | 152.9 |
| | | Expansion pressure | MPaG | 2.8 | 3.0 | 3.2 | 3.2 | 3.2 | 3.1 | 2.8 |
| | | Blowing agent | | $CO_2$ | $CO_2$ | $CO_2$ | $CO_2$ | $CO_2$ | $CO_2$ | $CO_2$ |
| | Expanded particles | Bulk density | g/L | 32 | 32 | 32 | 32 | 32 | 32 | 32 |
| | | High-temperature heat quantity ratio | % | 27 | 26 | 26 | 27 | 27 | 26 | 26 |
| | | Temperature at low-temperature -side peak | °C | 145.1 | 144.6 | 132.9 | 130.2 | 131.5 | 137.3 | 144.5 |
| | | Temperature at high-temperature -side peak | °C | 164.9 | 162 | 153.1 | 150.4 | 151.6 | 157.2 | 164.4 |
| | | Melting point - temperature at low-temperature -side peak | °C | 3.0 | 3.7 | 3.2 | 2.9 | 3.0 | 3.0 | 3.8 |
| | | Average cell diameter | μm | 150 | 160 | 180 | 160 | 160 | 140 | 150 |
| Second-step expansion | Expansion condition | Internal pressure | MPaG | - | - | - | - | - | - | - |
| | | Steam pressure | MPaG | - | - | - | - | - | - | - |
| | Expanded particles | Bulk density | g/L | - | - | - | - | - | - | - |
| | | High-temperature heat quantity ratio | % | - | - | - | - | - | - | - |
| | | Temperature at low-temperature -side peak | °C | - | - | - | - | - | - | - |
| | | Temperature at high-temperature -side peak | °C | - | - | - | - | - | - | - |
| | | Melting point - temperature at low-temperature -side peak | °C | - | - | - | - | - | - | - |
| | | Average cell diameter | μm | - | - | - | - | - | - | - |

EP 3 795 622 B1

37

| | | | Comparative Example 8 | Comparative Example 9 | Comparative Example 10 | Comparative Example 12 | Comparative Example 13 | Comparative Example 14 | Comparative Example 15 |
|---|---|---|---|---|---|---|---|---|---|
| Molding | Internal pressure | MPaG | - | - | - | - | - | - | - |
| | Gap in mold | % | - | - | - | - | - | - | - |
| | Compressed air pressure | MPaG | 1.5 | 1.7 | 1.2 | 1.2 | 1.2 | 1.1 | 1.5 |
| | Heating condition that achieves good molding | | Poor | - | Fair | Fair | Fair | Very Poor | Very Poor |
| | Heating condition (See Table 4) | | Level 2 | Level 1 | Level 3 | Level 3 | Level 3 | Level 1 | Level 1 |
| | Autoclave pressure | MPaG | 0.30 | 0.30 | 0.30 | 0.30 | 0.30 | 0.30 | 0.30 |
| | Density of molded product | g/L | 50 | 50 | 50 | 50 | 50 | 50 | 50 |
| | Amount of steam used | kg | 7.5 | 7.5 | 7.4 | 7.4 | 7.4 | 7.5 | 7.5 |
| | Water cooling time | Second | 50 | 50 | 50 | 50 | 50 | 50 | 50 |
| | Air cooling time (surface contact pressure cut 0.05MPa) | Second | 50 | 43 | 54 | 46 | 44 | 68 | 53 |
| | Mold cycle | Second | 167 | 160 | 171 | 163 | 161 | 185 | 170 |
| | Fusibility | | Good | Good | Good | Good | Good | Good | Good |
| | Surface property | | Good | Fair | Good | Good | Good | Good | Good |
| Physical properties of molded product (Heating condition: Level 1) | Density | g/L | 49 | 50 | 49 | 49 | 49 | 49 | 49 |
| | 50%-Strained compressive strength | kPa | 385 | 409 | 335 | 328 | 330 | 332 | 361 |
| | Whether Expression 2 is satisfied | | Satisfied | Satisfied | Not Satisfied | Not Satisfied | Not Satisfied | Not Satisfied | Not Satisfied |
| | Value of $[0.054 \times D^2 + 3.85 \times D + 50]$ | kPa | 368 | 378 | 368 | 368 | 368 | 368 | 368 |

EP 3 795 622 B1

[Table 3] (iii)

| | | | | Comparative Example 16 | Comparative Example 17 | Comparative Example 18 | Comparative Example 19 | Comparative Example 20 | Comparative Example 21 | Comparative Example 22 |
|---|---|---|---|---|---|---|---|---|---|---|
| Base material resin | Resin A | A-1 | % | | | | | | 80 | 80 |
| | | A-2 | % | | | | | | | |
| | | A-3 | % | | | | | | | |
| | | A-4 | % | | | | | | | |
| | | A-5 | % | 100 | 90 | 80 | | | | |
| | | A-6 | % | | | | 100 | 80 | | |
| | Ethylene-1-butene-polypropylene copolymer | B-1 | % | | | | | | | |
| | | B-2 | % | | 10 | 20 | | 20 | 20 | 20 |
| | | B-3 | % | | | | | | | |
| | | B-4 | % | | | | | | | |
| Additive | | Carbon black | % | 2.5 | 2.5 | 2.5 | 2.5 | 2.5 | 2.5 | 2.5 |
| | | Glycerin | % | 0.1 | 0.1 | 0.1 | 0.1 | 0.1 | 0.1 | 0.1 |
| | | Melamine | % | | | | | | | |
| | | Polyethylene glycol | % | | | | | | | |
| | | Talc | % | 0.01 | 0.01 | 0.01 | 0.01 | 0.01 | 0.01 | 0.01 |
| | | Stabilizer | % | 0.3 | 0.3 | 0.3 | 0.3 | 0.3 | 0.3 | 0.3 |
| Polypropylene-based resin particles | | Melting point | °C | 147.1 | 146.6 | 146.2 | 148.5 | 147.7 | 148.1 | 148.1 |
| | | Particle weight | mg/ particle | 0.75 | 0.75 | 0.75 | 0.75 | 0.75 | 0.75 | 0.75 |
| | | MFR | g/10 minutes | 2.3 | 2.5 | 2.7 | 11.6 | 10.9 | 7.4 | 7.4 |
| | | 1-Butene | wt% | 0 | 0.5 | 0.9 | 0 | 0.9 | 0.9 | 0.9 |

EP 3 795 622 B1

(continued)

| | | | Comparative Example 16 | Comparative Example 17 | Comparative Example 18 | Comparative Example 19 | Comparative Example 20 | Comparative Example 21 | Comparative Example 22 |
|---|---|---|---|---|---|---|---|---|---|
| First-step expansion | Expansion condition | Expansion temperature | °C | 151.3 | 150.8 | 150.3 | 152.9 | 151.9 | 153.1 | 152.0 |
| | | Expansion pressure | MPaG | 2.9 | 2.9 | 2.9 | 2.6 | 2.6 | 2.6 | 3.0 |
| | | Blowing agent | | $CO_2$ | $CO_2$ | $CO_2$ | $CO_2$ | $CO_2$ | $CO_2$ | $CO_2$ |
| | | Bulk density | g/L | 32 | 32 | 32 | 32 | 32 | 33 | 34 |
| | Expanded particles | High-temperature heat quantity ratio | % | 25 | 25 | 25 | 26 | 26 | 21 | 37 |
| | | Temperature at low-temperature-side peak | °C | 144.2 | 143.4 | 142.4 | 145.9 | 143.7 | 143.6 | 143.8 |
| | | Temperature at high-temperature-side peak | °C | 164.3 | 163.6 | 162.9 | 164.9 | 163.5 | 163.2 | 163.4 |
| | | Melting point - temperature at low-temperature-side peak | °C | 2.9 | 3.2 | 3.8 | 2.6 | 4.0 | 4.5 | 4.3 |
| | | Average cell diameter | μm | 150 | 150 | 160 | 150 | 150 | 170 | 150 |
| Second-step expansion | Expansion condition | Internal pressure | MPaG | - | - | - | - | - | - | - |
| | | Steam pressure | MPaG | - | - | - | - | - | - | - |
| | | Bulk density | g/L | - | - | - | - | - | - | - |
| | Expanded particles | High-temperature heat quantity ratio | % | - | - | - | - | - | - | - |
| | | Temperature at low-temperature-side peak | °C | - | - | - | - | - | - | - |
| | | Temperature at high-temperature-side peak | °C | - | - | - | - | - | - | - |
| | | Melting point - temperature at low-temperature-side peak | °C | - | - | - | - | - | - | - |
| | | Average cell diameter | μm | - | - | - | - | - | - | - |

(continued)

| | | | Comparative Example 16 | Comparative Example 17 | Comparative Example 18 | Comparative Example 19 | Comparative Example 20 | Comparative Example 21 | Comparative Example 22 |
|---|---|---|---|---|---|---|---|---|---|
| Molding | Internal pressure | MPaG | - | - | - | - | - | - | - |
| | Gap in mold | % | - | - | - | - | - | - | - |
| | Compressed air pressure | MPaG | 1.5 | 1.5 | 1.4 | 1.5 | 1.5 | 1.5 | 1.5 |
| | Heating condition that achieves good molding | | - | - | - | Poor | Poor | Fair | - |
| | Heating condition (See Table 4) | | Level 1 | Level 1 | Level 1 | Level 2 | Level 2 | Level 3 | Level 1 |
| | Autoclave pressure | MPaG | 0.30 | 0.30 | 0.30 | 0.30 | 0.30 | 0.30 | 0.30 |
| | Density of molded product | g/L | 50 | 50 | 50 | 50 | 50 | 50 | 50 |
| | Amount of steam used | kg | 7.5 | 7.5 | 7.5 | 7.5 | 7.5 | 7.4 | 7.5 |
| | Water cooling time | Second | 50 | 50 | 50 | 50 | 50 | 50 | 50 |
| | Air cooling time (surface contact pressure cut 0.05MPa) | Second | 32 | 38 | 46 | 72 | 64 | 85 | 23 |
| | Mold cycle | Second | 149 | 155 | 163 | 189 | 181 | 202 | 140 |
| | Fusibility | | Fair | Fair | Good | Good | Good | Good | Fair |
| | Surface property | | Poor | Poor | Fair | Good | Good | Good | Fair |
| Physical properties of molded product (Heating condition: Level 1) | Density | g/L | 49 | 49 | 49 | 49 | 49 | 49 | 50 |
| | 50%-Strained compressive strength | kPa | 381 | 373 | 367 | 386 | 380 | 374 | 397 |
| | Whether Expression 2 is satisfied | | Satisfied | Satisfied | Not Satisfied | Satisfied | Satisfied | Satisfied | Satisfied |
| | Value of [$0.054 \times D^2 + 3.85 \times D + 50$] | kPa | 368 | 368 | 368 | 368 | 368 | 368 | 378 |

[Table 3] (iv)

| | | | | Comparative Example 23 | Comparative Example 24 | Comparative Example 25 | Comparative Example 26 | Comparative Example 27 | Comparative Example 28 | Comparative Example 29 |
|---|---|---|---|---|---|---|---|---|---|---|
| Base material resin | Resin A | A-1 | % | 80 | 80 | 80 | 80 | 60 | 40 | |
| | | A-2 | % | | | | | | | |
| | | A-3 | % | | | | | | | |
| | | A-4 | % | | | | | | | 100 |
| | | A-5 | % | | | | | | | |
| | | A-6 | % | | | | | | | |
| | Ethylene-1-butene-polypropylene copolymer | B-1 | % | | | | | | | |
| | | B-2 | % | 20 | 20 | 20 | 20 | 40 | 60 | |
| | | B-3 | % | | | | | | | |
| | | B-4 | % | | | | | | | |
| Additive | | Carbon black | % | | | 2.5 | 2.5 | 2.5 | 2.5 | |
| | | Glycerin | % | | | | | 0.1 | 0.1 | |
| | | Melamine | % | | | | | | | |
| | | Polyethylene glycol | % | | | | | | | 0.5 |
| | | Talc | % | 0.15 | 0.15 | 0.05 | 0.05 | 0.01 | 0.01 | 0.05 |
| | | Stabilizer | % | 0.3 | 0.3 | 0.2 | 0.2 | 0.3 | 0.3 | 0.2 |
| Polypropylene-based resin particles | | Melting point | °C | 148.1 | 148.1 | 148.1 | 148.1 | 145.6 | 143.1 | 151.0 |
| | | Particle weight | mg/ particle | 0.75 | 0.75 | 1.8 | 1.8 | 0.75 | 0.75 | 1.20 |
| | | MFR | g/10 minutes | 7.4 | 7.4 | 7.4 | 7.4 | 7.3 | 7.2 | 8 |
| | | 1-Butene | wt% | 0.9 | 0.9 | 0.9 | 0.9 | 1.7 | 2.6 | 0 |

EP 3 795 622 B1

42

(continued)

| | | | | Comparative Example 23 | Comparative Example 24 | Comparative Example 25 | Comparative Example 26 | Comparative Example 27 | Comparative Example 28 | Comparative Example 29 |
|---|---|---|---|---|---|---|---|---|---|---|
| First-step expansion | Expansion condition | Expansion temperature | °C | 153.6 | 151.3 | 156.8 | 155.2 | 149.1 | 146.3 | 154.3 |
| | | Expansion pressure | MPaG | 2.7 | 3.5 | 1.8 | 2.7 | 3.0 | 3.2 | 3.5 |
| | | Blowing agent | | $CO_2$ | $CO_2$ | Air | Air | $CO_2$ | $CO_2$ | $CO_2$ |
| | Expanded particles | Bulk density | g/L | 74 | 76 | 107 | 110 | 32 | 32 | 26 |
| | | High-temperature heat quantity ratio | % | 17 | 35 | 16 | 32 | 26 | 27 | 25 |
| | | Temperature at low-temperature-side peak | °C | 143.6 | 143.6 | 144.1 | 143.9 | 140.6 | 136.1 | 147.2 |
| | | Temperature at high-temperature-side peak | °C | 163.2 | 163.2 | 163.9 | 163.8 | 160.9 | 157.9 | 167.5 |
| | | Melting point - temperature at low-temperature-side peak | °C | 4.5 | 4.5 | 4.0 | 4.2 | 5.0 | 7.0 | 3.8 |
| | | Average cell diameter | μm | 170 | 110 | 230 | 180 | 170 | 185 | 180 |
| Second-step expansion | Expansion condition | Internal pressure | MPaG | - | - | - | - | - | - | - |
| | | Steam pressure | MPaG | - | - | - | - | - | - | - |
| | Expanded particles | Bulk density | g/L | - | - | - | - | - | - | - |
| | | High-temperature heat quantity ratio | % | - | - | - | - | - | - | - |
| | | Temperature at low-temperature-side peak | °C | - | - | - | - | - | - | - |
| | | Temperature at high-temperature-side peak | °C | - | - | - | - | - | - | - |
| | | Melting point - temperature at low-temperature-side peak | °C | - | - | - | - | - | - | - |
| | | Average cell diameter | μm | - | - | - | - | - | - | - |

| | | | Comparative Example 23 | Comparative Example 24 | Comparative Example 25 | Comparative Example 26 | Comparative Example 27 | Comparative Example 28 | Comparative Example 29 |
|---|---|---|---|---|---|---|---|---|---|
| Molding | Internal pressure | MPaG | 0.06 | 0.06 | 0.05 | 0.05 | - | - | 0.11 |
| | Gap in mold | % | 10 | 10 | 20 | 20 | - | - | 10 |
| | Compressed air pressure | MPaG | - | - | - | - | 1.4 | 1.3 | - |
| | Heating condition that achieves good molding | | Fair | - | Poor | - | Fair | Fair | Very Poor |
| | Heating condition (See Table 4) | | Level 3 | Level 1 | Level 2 | Level 1 | Level 3 | Level 3 | Level 1 |
| | Autoclave pressure | MPaG | 0.30 | 0.30 | 0.30 | 0.35 | 0.30 | 0.30 | 0.30 |
| | Density of molded product | g/L | 90 | 90 | 150 | 150 | 50 | 50 | 30.5 |
| | Amount of steam used | kg | 7.4 | 7.5 | 7.5 | 7.5 | 7.4 | 7.4 | 7.5 |
| | Water cooling time | Second | 50 | 50 | 80 | 80 | 50 | 50 | 60 |
| | Air cooling time (surface contact pressure cut 0.05MPa) | Second | 92 | 13 | 74 | 0 | 42 | 52 | 88 |
| | Mold cycle | Second | 209 | 130 | 231 | 157 | 159 | 169 | 215 |
| | Fusibility | | Good | Fair | Good | Fair | Good | Good | Good |
| | Surface property | | Good | Poor | Good | Poor | Good | Good | Good |
| | | | | | | | | | |
| Physical properties of molded product (Heating condition: Level 1) | Density | g/L | 87 | 90 | 146 | 146 | 49 | 49 | 30 |
| | 50%-Strained compressive strength | kPa | 799 | 881 | 1797 | 1870 | 372 | 360 | 230 |
| | Whether Expression 2 is satisfied | | Satisfied | Satisfied | Satisfied | Satisfied | Satisfied | Not Satisfied | Satisfied |
| | Value of [0.054×D2+3.85×D+50] | kPa | 794 | 834 | 1763 | 1763 | 368 | 368 | 214 |

[Table 3] (v)

| Base materia 1 resin / Additive / etc. | | Property | Unit | Comparative Example 30 | Comparative Example 31 | Comparative Example 32 | Comparative Example 33 | Comparative Example 34 | Comparative Example 35 |
|---|---|---|---|---|---|---|---|---|---|
| Base materia 1 resin | Resin A | A-1 | % | | | | | 92 | 92 |
| | | A-2 | % | | | | | | |
| | | A-3 | % | | | | | | |
| | | A-4 | % | 95 | 60 | 60 | 60 | | |
| | | A-5 | % | | | | | | |
| | | A-6 | % | | | | | | |
| | Ethylene-1-butene-polypropylene copolymer | B-1 | % | | | | | | |
| | | B-2 | % | 5 | 40 | 40 | 40 | 8 | 8 |
| | | B-3 | % | | | | | | |
| | | B-4 | % | | | | | | |
| Additive | | Carbon black | % | 0.5 | 0.5 | 0.5 | 0.5 | 2.5 | 2.5 |
| | | Glycerin | % | 0.05 | 0.05 | 0.05 | 0.05 | 0.1 | 0.1 |
| | | Melamine | % | | | | | | |
| | | Polyethylene glycol | % | | | | | | |
| | | Talc | % | | | | | 0.01 | 0.01 |
| | | Stabilizer | % | 0.2 | 0.2 | 0.2 | 0.2 | 0.3 | 0.3 |
| Polypropylene-based resin particles | | Melting point | °C | 150.7 | 147.5 | 147.5 | 147.5 | 149.1 | 149.1 |
| | | Particle weight | mg/particle | 1.20 | 1.20 | 1.20 | 1.20 | 0.75 | 0.75 |
| | | MFR | g/10 minutes | 8 | 7.5 | 7.5 | 7.5 | 7.5 | 7.5 |
| | | 1-Butene | wt% | 0.2 | 1.7 | 1.7 | 1.7 | 0.3 | 0.3 |
| Expansion condition | | Expansion temperature | °C | 154.1 | 149.0 | 149.5 | 149.5 | 153.4 | 153.4 |
| | | Expansion pressure | MPaG | 3.5 | 3.5 | 3.3 | 3.3 | 2.8 | 2.8 |
| | | Blowing agent | | $CO_2$ | $CO_2$ | $CO_2$ | $CO_2$ | $CO_2$ | $CO_2$ |

| | | | | Comparative Example 30 | Comparative Example 31 | Comparative Example 32 | Comparative Example 33 | Comparative Example 34 | Comparative Example 35 |
|---|---|---|---|---|---|---|---|---|---|
| First-step expansion | Expanded particles | Bulk density | g/L | 26 | 26 | 26 | 26 | 32 | 32 |
| | | High-temperature heat quantity ratio | % | 25 | 25 | 21 | 21 | 27 | 27 |
| | | Temperature at low-temperature-side peak | °C | 146.8 | 141.1 | 141.0 | 141.0 | 145.4 | 145.4 |
| | | Temperature at high-temperature-side peak | °C | 167.1 | 164.1 | 164 | 164 | 165.3 | 165.3 |
| | | Melting point - temperature at low-temperature-side peak | °C | 3.9 | 6.4 | 6.5 | 6.5 | 3.7 | 3.7 |
| | | Average cell diameter | μm | 180 | 180 | 190 | 190 | 150 | 150 |
| Second-step expansion | Expansion condition | Internal pressure | MPaG | - | - | - | - | - | - |
| | | Steam pressure | MPaG | - | - | - | - | - | - |
| | Expanded particles | Bulk density | g/L | - | - | - | - | - | - |
| | | High-temperature heat quantity ratio | % | - | - | - | - | - | - |
| | | Temperature at low-temperature-side peak | °C | - | - | - | - | - | - |
| | | Temperature at high-temperature-side peak | °C | - | - | - | - | - | - |
| | | Melting point - temperature at low-temperature-side peak | °C | - | - | - | - | - | - |
| | | Average cell diameter | μm | - | - | - | - | - | - |

| | | | Comparative Example 30 | Comparative Example 31 | Comparative Example 32 | Comparative Example 33 | Comparative Example 34 | Comparative Example 35 |
|---|---|---|---|---|---|---|---|---|
| Molding | Internal pressure | MPaG | 0.11 | 0.11 | 0.11 | 0.11 | - | - |
| | Gap in mold | % | 10 | 10 | 10 | 10 | - | - |
| | Compressed air pressure | MPaG | - | - | - | - | 1.6 | 1.6 |
| | Heating condition that achieves good molding | | Very Poor | Poor | Fair | Fair | Poor | Poor |
| | Heating condition (See Table 4) | | Level 1 | Level 2 | Level 3 | Level 4 | Level 2 | Level 4 |
| | Autoclave pressure | MPaG | 0.30 | 0.30 | 0.30 | 0.30 | 0.30 | 0.30 |
| | Density of molded product | g/L | 30.5 | 30.5 | 30.5 | 30.5 | 50 | 50 |
| | Amount of steam used | kg | 7.5 | 7.5 | 7.4 | 5.2 | 7.5 | 5.2 |
| | Water cooling time | Second | 60 | 60 | 60 | 60 | 50 | 50 |
| | Air cooling time (surface contact pressure cut 0.05MPa) | Second | 86 | 74 | 76 | 102 | 41 | 40 |
| | Mold cycle | Second | 213 | 201 | 203 | 221 | 158 | 149 |
| | Fusibility | | Good | Good | Good | Fair | Good | Fair |
| | Surface property | | Good | Good | Good | Fair | Good | Fair |
| Physical properties of molded product (Heating condition: Level 1) | Density | g/L | 30 | 30 | 30 | 30 | 49 | 49 |
| | 50%-Strained compressive strength | kPa | 230 | 219 | 215 | 215 | 391 | 391 |
| | Whether Expression 2 is satisfied | | Satisfied | Satisfied | Satisfied | Satisfied | Satisfied | Satisfied |
| | Value of [0.054×D$^2$+3.85×D+50] | kPa | 214 | 214 | 214 | 214 | 368 | 368 |

[Table 4]

| Expanded particles | Level | Heating condition | | | | | | | Mold cycle [Second] | Amount of steam used [kg] | Fusibility | Surface property |
|---|---|---|---|---|---|---|---|---|---|---|---|---|
| | | Air purging step | Cross steaming step | | Counter cross steaming step | | Autoclave step | | | | | |
| | | Time [Second] | Pressure [MPaG] | Time [Second] | Pressure [MPaG] | Time [Second] | Pressure [MPaG] | Time [Second] | | | | |
| Example 2 | 1 | 2 | 1.5 | 7 | 1.5 | 7 | 3.0 | 6 | 165 | 7.5 | Good | Good |
| | 2 | 2 | 1.5 | 7 | 1.5 | 7 | 2.8 | 6 | 150 | 7.5 | Good | Good |
| | 3 | 2 | 1.5 | 7 | 1.5 | 7 | 2.6 | 6 | 135 | 7.4 | Good | Good |
| | 4 | 2 | 1.5 | 3 | 1.5 | 3 | 3.0 | 6 | 136 | 5.2 | Good | Good |
| | 5 | 2 | 1.5 | 3 | 1.5 | 3 | 2.8 | 6 | 125 | 5.1 | Good | Good |
| Comparative Example 2 | 1 | 2 | 1.5 | 7 | 1.5 | 7 | 3.0 | 6 | 172 | 7.5 | Good | Fair |
| | 2 | 2 | 1.5 | 7 | 1.5 | 7 | 2.8 | 6 | 162 | 7.5 | Good | Poor |
| | 3 | 2 | 1.5 | 7 | 1.5 | 7 | 2.6 | 6 | 120 | 7.4 | Poor | Fair |
| | 4 | 2 | 1.5 | 3 | 1.5 | 3 | 3.0 | 6 | 155 | 5.2 | Fair | Fair |
| | 5 | 2 | 1.5 | 3 | 1.5 | 3 | 2.8 | 6 | 120 | 5.1 | Fair | Poor |

As a result, the Examples are all within the scope of the claims, and therefore all objects are attained. The results indicate the following. When comparison is made between an Example and a Comparative Example which are equal in density of molded product, good molding is achieved even at Level 4 (heating time is short) in the Example; therefore, only a small amount of steam is sufficient in the Example, mold cycle in the Example is shorter than the corresponding Comparative Example, and sufficient 50%-strained compressive strength is achieved in the Example.

Table 4 shows the amounts of steam used in respective heating conditions. Table 4 indicates that even when the autoclave pressure is lowered (for example, in a case where heating level 3 is compared with heating level 1), the achieved effect of reducing the amount of steam used is very small, and that a reduction in heating time like heating level 4 or 5 provides a significant effect of reducing the amount of steam used.

In Comparative Examples 1 to 7, the lower limit of the condition (A) (i.e., 100 weight% of the polypropylene-based resin particles contain, as a comonomer, a structural unit composed of 1-butene in an amount of not less than 0.1 weight%) is not satisfied and the upper limit of condition (C) (i.e., the polypropylene-based resin particles have a melting point of not higher than 149.4°C) is not satisfied, and the "heating condition that achieves good molding" is only Level 1, i.e., the range of usable molding condition is narrow.

In Comparative Example 8, the lower limit of condition (A) is not satisfied, and the "heating conditions that achieve good molding" are only Levels 1 and 2, i.e., the range of usable molding condition is narrow.

In Comparative Example 9, the upper limit of condition (A) (i.e., 100 weight% of the polypropylene-based resin particles contain, as a comonomer, a structural unit composed of 1-butene in an amount of less than 3 weight%) is not satisfied, and there are no "heating conditions that achieve good molding".

In Comparative Examples 10, 12, and 13, the upper limit of condition (A) is not satisfied and the lower limit of condition (C) (i.e., the polypropylene-based resin particles have a melting point of not lower than 146.5°C) is not satisfied. Although good molding is achieved at Levels 1 to 3, the amount of steam used is difficult to reduce, and the compressive strength of the obtained polypropylene-based resin in-mold foamed molded product is less than a certain level.

In Comparative Example 14, the lower limit of condition (A) is not satisfied and the lower limit of condition (C) is not satisfied, and the "heating condition that achieves good molding" is only Level 1, i.e., the range of usable molding condition is narrow.

In Comparative Example 15, the lower limit of condition (A) is not satisfied, and the "heating condition that achieves good molding" is only Level 1. The amount of steam used is difficult to reduce, and the compressive strength of the obtained polypropylene-based resin in-mold foamed molded product is less than a certain level.

In Comparative Examples 16 to 18, the lower limit of condition (B) (i.e., the polypropylene-based resin particles have a melt flow rate of not less than 5 g/10minutes) is not satisfied, and there are no "heating conditions that achieve good molding".

In Comparative Examples 19 and 20, the upper limit of condition (B) (i.e., the polypropylene-based resin particles have a melt flow rate of not more than 10 g/10minutes) is not satisfied, and the "heating conditions that achieve good molding" are only Levels 1 and 2, i.e., the range of usable molding condition is narrow.

In Comparative Examples 21 and 23, although conditions (A) to (C) are satisfied, the lower limit of condition (b) (high-temperature heat quantity ratio) is not satisfied. Although good molding is achieved at Levels 1 to 3, the amount of steam used is difficult to reduce, and mold cycle becomes long. In Comparative Example 25, the range of usable molding condition is narrow and, as with Comparative Examples 21 and 23, the amount of steam used is difficult to reduce and mold cycle is long.

In Comparative Examples 22, 24, and 26, although conditions (A) to (C) are satisfied, the upper limit of condition (b) is not satisfied. There are no "heating conditions that achieve good molding".

In Comparative Examples 27 and 28, the lower limit of condition (C) is not satisfied. Although good molding is achieved at Levels 1 to 3, the amount of steam used is difficult to reduce, and mold cycle becomes longer than those of Example 2 and Comparative Example 2. In Comparative Example 28, the compressive strength of the obtained polypropylene-based resin in-mold foamed molded product is less than a certain level.

In Comparative Example 29, the lower limit of condition (A) is not satisfied and the upper limit of condition (C) is not satisfied, and the "heating condition that achieves good molding" is only Level 1, i.e., the range of usable molding condition is narrow.

In Comparative Example 30, the upper limit of condition (C) is not satisfied, and the "heating condition that achieves good molding" is only Level 1, i.e., the range of usable molding condition is narrow.

In Comparative Example 31, although conditions (A) to (C) are satisfied, conditions (a) (temperature at the low-temperature-side peak and temperature at the high-temperature-side peak in DSC curve) and (c) (difference between the melting point of the polypropylene-based resin particles and the temperature at the low-temperature-side peak) are not satisfied. The "heating conditions that achieve good molding" are only Levels 1 and 2, i.e., the range of usable molding condition is narrow.

In Comparative Example 32, although conditions (A) to (C) are satisfied, conditions (a) to (c) are not satisfied. Although the "heating conditions that achieve good molding" are Levels 1 to 3, the amount of steam used is difficult to reduce, and mold cycle is long.

In Comparative Example 33, the same polypropylene-based resin expanded particles as those used in Comparative Example 32 were molded in the condition of Level 4. In this heating condition, particles inside the obtained polypropylene-based resin in-mold foamed molded product were poorly fused, and also the number of inter-particle dimples on the surface of the molded product was somewhat large, i.e., surface property was inferior.

In Comparative Example 34, although conditions (A) to (C) are satisfied, condition (a) is not satisfied. The "heating conditions that achieve good molding" are only Levels 1 and 2, and the amount of steam used is difficult to reduce.

In Comparative Example 35, the same polypropylene-based resin expanded particles as those used in Comparative Example 34 were molded in the condition of Level 4. In this heating condition, particles at the edges of the obtained polypropylene-based resin in-mold foamed molded product were poorly fused, and also the number of inter-particle dimples on the surface of the molded product was somewhat large, i.e., surface property was inferior.

Industrial Applicability

Polypropylene-based resin expanded particles in accordance with an embodiment of the present invention are capable of achieving both a reduction in amount of steam used and a reduction in mold cycle when producing a polypropylene-based resin in-mold foamed molded product by molding. The polypropylene-based resin expanded particles can also be used to produce an in-mold foamed molded product having good surface property, good fusibility, and good compressive strength. Specifically, polypropylene-based resin expanded particles and a polypropylene-based resin in-mold foamed molded product in accordance with an embodiment of the present invention can be suitably used in various applications such as automotive interior materials, automotive bumper core materials, heat insulating materials, shock-absorbing packing materials, and returnable containers.

Reference Signs List

$t_m$: Melting point (peak temperature on DSC curve obtained during the second temperature rise of polypropylene-based resin [or base material resin])

Point A: Heat absorption quantity at 100°C on DSC curve obtained during the first temperature rise of polypropylene-based resin expanded particles

Point B: Heat absorption quantity at the temperature at which high-temperature-side melting ends, on DSC curve obtained during the first temperature rise of polypropylene-based resin expanded particles

Point C: The point at which the heat absorption quantity is smallest between the following two melting heat quantity regions: low-temperature-side melting heat quantity and high-temperature-side melting heat quantity on DSC curve obtained during the first temperature rise of polypropylene-based resin expanded particles

Point D: Intersection of line segment A-B and a line that extends from point C to line segment A-B in a direction parallel to Y axis, on DSC curve obtained during the first temperature rise of polypropylene-based resin expanded particles

Q1: Low-temperature-side melting heat quantity in DSC curve obtained during the first temperature rise of polypropylene-based resin expanded particles

Qh: High-temperature-side melting heat quantity in DSC curve obtained during the first temperature rise of polypropylene-based resin expanded particles

**Claims**

1. Polypropylene-based resin expanded particles obtained by expanding polypropylene-based resin particles, wherein:

    the polypropylene-based resin particles satisfy the following conditions (A), (B), and (C); and
    the polypropylene-based resin expanded particles satisfy the following conditions (a) and (b):

        (A) 100 weight% of the polypropylene-based resin particles contain, as a comonomer, a structural unit composed of 1-butene in an amount of not less than 0.1 weight% and less than 3 weight%;
        (B) the polypropylene-based resin particles have a melt flow rate of not less than 5 g/10minutes and not more than 10 g/10minutes;
        (C) the polypropylene-based resin particles have a melting point of not lower than 146.5°C and not higher than 149.4°C;

(a) in differential scanning calorimetry of the polypropylene-based resin expanded particles, a DSC curve, obtained during a first temperature rise in which a temperature of the polypropylene-based resin expanded particles is raised from 40°C to 220°C at a rate of 10°C/minute, shows two peaks consisting of a low-temperature-side peak and a high-temperature-side peak, a temperature at the low-temperature-side peak is not lower than 141.5°C and not higher than 145.5°C, and a temperature at the high-temperature-side peak is not lower than 161.5°C and not higher than 165°C;

(b) in the differential scanning calorimetry of the polypropylene-based resin expanded particles, a high-temperature heat quantity ratio found from the following equation (1) is

not less than 23% and not more than 35% when the polypropylene-based resin expanded particles have a bulk density of not less than 10 g/L and less than 35 g/L,

not less than 21% and not more than 33% when the polypropylene-based resin expanded particles have a bulk density of not less than 35 g/L and less than 80 g/L, and

not less than 17% and not more than 30% when the polypropylene-based resin expanded particles have a bulk density of not less than 80 g/L and less than 300 g/L:

$$\text{High-temperature heat quantity ratio} = \{Qh/(Ql+Qh)\} \times 100\ (\%)\ \dots\ \text{Equation (1)},$$

where Ql is a low-temperature-side melting heat quantity found from the DSC curve obtained during the first temperature rise, and Qh is a high-temperature-side melting heat quantity found from the DSC curve, wherein 100 weight% of the polypropylene-based resin particles contain a propylene/ethylene/1-butene random copolymer in an amount of not less than 10 weight% and not more than 35 weight%, and wherein the melt flow rate, melting point and the parameters of (a) and (b) are determined as set out in the description.

2. The polypropylene-based resin expanded particles as set forth in claim 1, wherein the polypropylene-based resin expanded particles further satisfy the following condition (c):

(c) in the differential scanning calorimetry of the polypropylene-based resin expanded particles, a difference between the melting point of the polypropylene-based resin particles and the temperature at the low-temperature-side peak is not less than 2.5°C and less than 5.0°C, wherein the parameters of (c) are determined as set out in the description.

3. The polypropylene-based resin expanded particles as set forth in claim 1 or 2, wherein the polypropylene-based resin expanded particles have an average cell diameter of not less than 100 $\mu$m and not more than 350 $\mu$m.

4. The polypropylene-based resin expanded particles as set forth in any one of claims 1 to 3, wherein the polypropylene-based resin expanded particles are obtained by:

placing the polypropylene-based resin particles, water, and an inorganic gas blowing agent in a pressure-resistant vessel, the polypropylene-based resin particles containing a polypropylene-based resin as a base material resin; and

while stirring materials in the pressure-resistant vessel, raising a temperature inside the pressure-resistant vessel to an expansion temperature and raising a pressure inside the pressure-resistant vessel to an expansion pressure and thereafter releasing a dispersion slurry containing the polypropylene-based resin particles into an area having a pressure lower than the expansion pressure.

5. The polypropylene-based resin expanded particles as set forth in claim 4, wherein the inorganic gas blowing agent is air or carbon dioxide.

6. A polypropylene-based resin in-mold foamed molded product obtained by molding polypropylene-based resin expanded particles recited in any one of claims 1 to 5.

7. The polypropylene-based resin in-mold foamed molded product as set forth in claim 6, wherein a 50%-strained compressive strength measured by a method in accordance with ISO844 satisfies the following expression (2):

$$\text{50\%-Strained compressive strength (kPa)} \geq 0.054 \times D^2 + 3.85 \times D + 50\ \dots\ \text{Expression (2)},$$

where D is a density of the polypropylene-based resin in-mold foamed molded product, and
wherein the 50%-strained compressive strength is determined as set out in the description.

8. A method of producing polypropylene-based resin expanded particles, comprising the steps of:

1) placing polypropylene-based resin particles, water, and an inorganic gas blowing agent in a pressure-resistant vessel; and
2) while stirring materials in the pressure-resistant vessel, (i) raising a temperature inside the pressure-resistant vessel to an expansion temperature and raising a pressure inside the pressure-resistant vessel to an expansion pressure and then (ii) releasing a dispersion slurry containing the polypropylene-based resin particles into an area having a pressure lower than the expansion pressure,
wherein the polypropylene-based resin particles satisfy the following (a) to (c):

(a) 100 weight% of the polypropylene-based resin particles contain, as a comonomer, a structural unit derived from 1-butene in an amount of not less than 0.1 weight% and less than 3 weight%;
(b) the polypropylene-based resin particles have an MFR of not less than 5 g/10minutes and not more than 10 g/10minutes; and
(c) the polypropylene-based resin particles have a melting point of not lower than 146.5°C and not higher than 149.4°C, and

wherein, in step 2),
a retention time from when the temperature inside the pressure-resistant vessel reaches a temperature 2°C below the expansion temperature to when the dispersion slurry starts being released into the area having a pressure lower than the expansion pressure after the temperature inside the pressure-resistant vessel is raised to the expansion temperature is not less than 5 minutes and not more than 120 minutes,
the expansion temperature is not lower than 149°C and not higher than 158°C, and
the expansion pressure is not lower than 1.0 MPa·G and not higher than 3.5 MPa·G,
wherein 100 weight% of the polypropylene-based resin particles contain a propylene/ethylene/1-butene random copolymer in an amount of not less than 10 weight% and not more than 35 weight%, and
wherein the melt flow rate and melting point are determined as set out in the description.

9. The method as set forth in claim 8, wherein the inorganic gas blowing agent is air or carbon dioxide.

**Patentansprüche**

1. Expandierte Partikel aus Harz auf Polypropylenbasis, erhalten durch Expandieren von Partikeln aus Harz auf Polypropylenbasis, wobei:

die Partikel aus Harz auf Polypropylenbasis die nachstehenden Bedingungen (A), (B) und (C) erfüllen; und
die expandierten Partikel aus Harz auf Polypropylenbasis die nachstehenden Bedingungen (a) und (b) erfüllen:

(A) 100 Gewichts-% der Partikel aus Harz auf Polypropylenbasis enthalten als Comonomer eine Struktureinheit aus 1-Buten in einer Menge von nicht weniger als 0,1 Gewichts-% und weniger als 3 Gewichts-%;
(B) die Partikel aus Harz auf Polypropylenbasis haben eine Schmelzflussrate von nicht weniger als 5 g/10 Minuten und nicht mehr als 10 g/10 Minuten;
(C) die Partikel aus Harz auf Polypropylenbasis haben einen Schmelzpunkt von nicht weniger als 146,5°C und nicht mehr als 149,4°C;

(a) bei der Differential-Scanning-Kalorimetrie der expandierten Partikel aus Harz auf Polypropylenbasis zeigt eine DSC-Kurve, erhalten während eines ersten Temperaturanstiegs, bei dem eine Temperatur der expandierten Partikel aus Harz auf Polypropylenbasis mit einer Rate von 10°C/Minute von 40°C auf 220°C erhöht wird, zwei Peaks, die aus einem Peak auf der Niedrigtemperaturseite und einem Peak auf der Hochtemperaturseite bestehen, eine Temperatur an dem Peak auf der Niedrigtemperaturseite beträgt nicht weniger als 141,5°C und nicht mehr als 145,5°C und eine Temperatur an dem Peak auf der Hochtemperaturseite beträgt nicht weniger als 161,5°C und nicht mehr als 165°C;
(b) bei der Differential-Scanning-Kalorimetrie der expandierten Partikel aus Harz auf Polypropylenbasis beträgt ein Hochtemperatur-Wärmemengenverhältnis, ermittelt aus der nachstehenden Gleichung (1),

nicht weniger als 23% und nicht mehr als 35%, wenn die expandierten Partikel aus Harz auf Polypropylenbasis eine Schüttdichte von nicht weniger als 10 g/l und weniger als 35 g/l aufweisen,
nicht weniger als 21% und nicht mehr als 33%, wenn die expandierten Partikel aus Harz auf Polypropylenbasis eine Schüttdichte von nicht weniger als 35 g/l und weniger als 80 g/l aufweisen, und
nicht weniger als 17% und nicht mehr als 30%, wenn die expandierten Partikel aus Harz auf Polypropylenbasis eine Schüttdichte von nicht weniger als 80 g/l und weniger als 300 g/l aufweisen:

$$\text{Hochtemperatur-Wärmemengenverhältnis} = \{Qh/(Ql+Qh)\} \times 100 \ (\%) \ ... \ \text{Gleichung (1)},$$

wobei Ql eine Schmelzwärmemenge auf der Niedrigtemperaturseite ist, die aus der während des ersten Temperaturanstiegs erhaltenen DSC-Kurve ermittelt wird, und Qh eine Schmelzwärmemenge auf der Hochtemperaturseite ist, die aus der DSC-Kurve ermittelt wird,
wobei 100 Gewichts-% der Partikel aus Harz auf Polypropylenbasis ein statistisches Propylen/Ethylen/1-Buten-Copolymer in einer Menge von nicht weniger als 10 Gewichts-% und nicht mehr als 35 Gewichts-% enthalten, und
wobei die Schmelzflussrate, der Schmelzpunkt und die Parameter von (a) und (b) wie in der Beschreibung angegeben bestimmt werden.

2. Die expandierten Partikel aus Harz auf Polypropylenbasis nach Anspruch 1, wobei die expandierten Partikel aus Harz auf Polypropylenbasis ferner die nachstehende Bedingung (c) erfüllen:

(c) bei der Differential-Scanning-Kalorimetrie der expandierten Partikel aus Harz auf Polypropylenbasis beträgt eine Differenz zwischen dem Schmelzpunkt der Partikel aus Harz auf Polypropylenbasis und der Temperatur am Peak auf der Niedrigtemperaturseite nicht weniger als 2,5°C und weniger als 5,0°C,
wobei die Parameter von (c) wie in der Beschreibung angegeben bestimmt werden.

3. Die expandierten Partikel aus Harz auf Polypropylenbasis nach Anspruch 1 oder 2, wobei die expandierten Partikel aus Harz auf Polypropylenbasis einen mittleren Zelldurchmesser von nicht weniger als 100 $\mu$m und nicht mehr als 350 $\mu$m aufweisen.

4. Die expandierten Partikel aus Harz auf Polypropylenbasis nach einem der Ansprüche 1 bis 3, wobei die expandierten Partikel aus Harz auf Polypropylenbasis erhalten werden durch:

Einbringen der Partikel aus Harz auf Polypropylenbasis, Wasser und eines anorganischen Gastreibmittels in einen druckfesten Behälter, wobei die Partikel aus Harz auf Polypropylenbasis ein Harz auf Polypropylenbasis als Grundmaterialharz enthalten; und
während des Rührens der Materialien in dem druckfesten Behälter, Erhöhen einer Temperatur im Inneren des druckfesten Behälters auf eine Expansionstemperatur und Erhöhen eines Drucks im Inneren des druckfesten Behälters auf einen Expansionsdruck und danach Freisetzen einer Dispersionsaufschlämmung, die die Partikel aus Harz auf Polypropylenbasis enthält, in einen Bereich mit einem Druck, der niedriger ist als der Expansionsdruck.

5. Die expandierten Partikel aus Harz auf Polypropylenbasis nach Anspruch 4, wobei das anorganische Gastreibmittel Luft oder Kohlendioxid ist.

6. Ein in der Form geschäumtes Formprodukt aus Harz auf Polypropylenbasis, erhalten durch Formen von expandierten Partikeln aus Harz auf Polypropylenbasis nach einem der Ansprüche 1 bis 5.

7. Das in der Form geschäumte Formprodukt aus Harz auf Polypropylenbasis nach Anspruch 6, wobei eine durch ein Verfahren gemäß ISO 844 gemessene Druckfestigkeit bei 50% Belastung den nachstehenden Ausdruck (2) erfüllt:

$$\text{Druckfestigkeit bei 50\% Belastung (kPa)} \geq 0,054 \times D^2 + 3,85 \times D + 50 \ ... \ \text{Ausdruck (2)},$$

wobei D eine Dichte des in der Form geschäumten Formprodukts aus Harz auf Polypropylenbasis ist, und wobei die Druckfestigkeit bei 50% Belastung wie in der Beschreibung angegeben bestimmt wird.

8. Ein Verfahren zur Herstellung von expandierten Partikeln aus Harz auf Polypropylenbasis, umfassend die Schritte:

1) Einbringen von Partikeln aus Harz auf Polypropylenbasis, Wasser und einem anorganischen Gastreibmittel in einen druckfesten Behälter; und

2) unter Rühren der Materialien in dem druckfesten Behälter (i) Erhöhen einer Temperatur im Inneren des druckfesten Behälters auf eine Expansionstemperatur und Erhöhen eines Drucks im Inneren des druckfesten Behälters auf einen Expansionsdruck und dann (ii) Freisetzen einer Dispersionsaufschlämmung, die die Partikel aus Harz auf Polypropylenbasis enthält, in einen Bereich mit einem Druck, der niedriger ist als der Expansionsdruck,

wobei die Partikel aus Harz auf Polypropylenbasis die nachstehenden (a) bis (c) erfüllen:

(a) 100 Gewichts-% der Partikel aus Harz auf Polypropylenbasis enthalten als Comonomer eine Struktureinheit, die von 1-Buten abgeleitet ist, in einer Menge von nicht weniger als 0,1 Gewichts-% und weniger als 3 Gewichts-%;

(b) die Partikel aus Harz auf Polypropylenbasis weisen eine MFR von nicht weniger als 5 g/10 Minuten und nicht mehr als 10 g/10 Minuten auf; und

(c) die Partikel aus Harz auf Polypropylenbasis weisen einen Schmelzpunkt von nicht weniger als 146,5°C und nicht mehr als 149,4°C auf, und

wobei in Schritt 2)

eine Verweilzeit von dem Zeitpunkt, zu dem die Temperatur im Inneren des druckfesten Behälters eine Temperatur von 2°C unterhalb der Expansionstemperatur erreicht, bis zu dem Zeitpunkt, zu dem die Dispersionsaufschlämmung in den Bereich mit einem Druck unterhalb des Expansionsdrucks freigesetzt wird, nachdem die Temperatur im Inneren des druckfesten Behälters auf die Expansionstemperatur angehoben wurde, nicht weniger als 5 Minuten und nicht mehr als 120 Minuten beträgt,

die Expansionstemperatur nicht weniger als 149°C und nicht mehr als 158°C beträgt und

der Expansionsdruck nicht weniger als 1,0 MPa·G und nicht mehr als 3,5 MPa·G beträgt, wobei 100 Gewichts-% der Partikel aus Harz auf Polypropylenbasis ein statistisches Propylen/Ethylen/1-Buten-Copolymer in einer Menge von nicht weniger als 10 Gewichts-% und nicht mehr als 35 Gewichts-% enthalten, und

wobei die Schmelzflussrate und der Schmelzpunkt wie in der Beschreibung angegeben bestimmt werden.

9. Das Verfahren nach Anspruch 8, wobei das anorganische Gastreibmittel Luft oder Kohlendioxid ist.

**Revendications**

1. Particules expansées de résine à base de polypropylène obtenues par expansion de particules de résine à base de polypropylène, dans lesquelles :

les particules de résine à base de polypropylène satisfont aux conditions (A), (B) et (C) qui suivent ; et
les particules expansées de résine à base de polypropylène satisfont aux conditions (a) et (b) qui suivent :

(A) 100 % en poids des particules de résine à base de polypropylène contiennent, à titre de comonomère, un motif structurel composé de 1-butène en une quantité non inférieure à 0,1 % en poids et inférieure à 3 % en poids ;

(B) les particules de résine à base de polypropylène ont un indice de fluage non inférieur à 5 g/10 minutes et non supérieur à 10 g/10 minutes ;

(C) les particules de résine à base de polypropylène ont un point de fusion non inférieur à 146,5 °C et non supérieur à 149,4 °C ;

(a) dans une calorimétrie à balayage différentiel des particules expansées de résine à base de polypropylène, une courbe de DSC, obtenue pendant une première montée en température dans laquelle la température des particules expansées de résine à base de polypropylène est portée de 40 °C à 220 °C à une vitesse de 10 °C/minute, présente deux pics consistant en un pic du côté des basses températures et un pic du côté des températures élevées, une température au niveau du pic du côté des basses températures n'est pas inférieure à 141,5 °C et pas supérieure à 145,5 °C, et une température au niveau du pic du côté des températures élevées n'est pas inférieure à 161,5 °C et pas supérieure à 165 °C ;

(b) dans la calorimétrie à balayage différentiel des particules expansées de résine à base de polypropylène, le rapport des quantités de chaleur à température élevée, trouvé à partir de l'équation (1) qui suit, est

non inférieur à 23 % et non supérieur à 35 % quand les particules expansées de résine à base de polypropylène ont une masse volumique apparente non inférieure à 10 g/l et inférieure à 35 g/l,
non inférieur à 21 % et non supérieur à 33 % quand les particules expansées de résine à base de polypropylène ont une masse volumique apparente non inférieure à 35 g/l et inférieure à 80 g/l, et
non inférieur à 17 % et non supérieur à 30 % quand les particules expansées de résine à base de polypropylène ont une masse volumique apparente non inférieure à 80 g/l et inférieure à 300 g/l :

$$\text{rapport des quantités de chaleur à température élevée} = \{Qh/(Ql/Qh)\} \times 100 \ (\%)$$

$$\dots \text{équation (1),}$$

où Ql est la quantité de chaleur de fusion du côté des basses températures trouvée à partir de la courbe de DSC obtenue pendant la première montée en température, et Qh est la quantité de chaleur de fusion du côté des températures élevées trouvée à partir de la courbe de DSC,
dans lesquelles 100 % en poids des particules de résine à base de polypropylène contiennent un copolymère aléatoire de propylène/éthylène/1-butène en une quantité non inférieure à 10 % en poids et non supérieure à 35 % en poids, et
dans lesquelles l'indice de fluage, le point de fusion et les paramètres de (a) et (b) sont déterminés comme indiqué dans la description.

2. Particules expansées de résine à base de polypropylène selon la revendication 1, lesquelles particules expansées de résine à base de polypropylène satisfont en outre à la condition (c) suivante :

(c) dans une calorimétrie à balayage différentiel des particules expansées de résine à base de polypropylène, une différence entre le point de fusion des particules de résine à base de polypropylène et la température au niveau du pic du côté des basses températures n'est pas inférieure à 2,5 °C et est inférieure à 5,0 °C,
dans lesquelles les paramètres de (c) sont déterminés comme indiqué dans la description.

3. Particules expansées de résine à base de polypropylène selon la revendication 1 ou 2, lesquelles particules expansées de résine à base de polypropylène ont un diamètre de cellule moyen non inférieur à 100 $\mu$m et non supérieur à 350 $\mu$m.

4. Particules expansées de résine à base de polypropylène selon l'une quelconque des revendications 1 à 3, lesquelles particules expansées de résine à base de polypropylène sont obtenues par :

placement des particules de résine à base de polypropylène, d'eau, et d'un agent gonflant gazeux inorganique dans un récipient résistant à la pression, les particules de résine à base de polypropylène contenant une résine à base de polypropylène en tant que résine de matériau de base ; et
sous agitation des matériaux dans le récipient résistant à la pression, élévation de la température à l'intérieur du récipient résistant à la pression jusqu'à la température d'expansion et élévation de la pression à l'intérieur du récipient résistant à la pression jusqu'à la pression d'expansion, et ensuite libération d'une bouillie en dispersion contenant les particules de résine à base de polypropylène dans une zone ayant une pression inférieure à la pression d'expansion.

5. Particules expansées de résine à base de polypropylène selon la revendication 4, dans lesquelles l'agent gonflant gazeux inorganique est l'air ou le dioxyde de carbone.

6. Produit moulé expansé dans le moule en résine à base de polypropylène, obtenu par moulage de particules expansées de résine à base de polypropylène définies dans l'une quelconque des revendications 1 à 5.

7. Produit moulé expansé dans le moule en résine à base de polypropylène selon la revendication 6, dans lequel une résistance à la compression sous contrainte de 50 %, mesurée par une méthode conforme à la norme ISO844, satisfait à l'expression (2) suivante :

résistance à la compression sous contrainte de 50 % (kPa) $\geq$

$0,054 \times D^2 + 3,85 \times D + 50$  … Expression (2),

où D est la masse volumique du produit moulé expansé dans le moule en résine à base de polypropylène, et dans lequel la résistance à la compression sous contrainte de 50 % est déterminée comme indiqué dans la description.

8. Méthode de production de particules expansées de résine à base de polypropylène, comprenant les étapes de :

1) placement de particules de résine à base de polypropylène, d'eau, et d'un agent gonflant gazeux inorganique dans un récipient résistant à la pression ; et
2) sous agitation des matériaux dans le récipient résistant à la pression, (i) élévation de la température à l'intérieur du récipient résistant à la pression jusqu'à la température d'expansion et élévation de la pression à l'intérieur du récipient résistant à la pression jusqu'à la pression d'expansion, et ensuite (ii) libération d'une bouillie en dispersion contenant les particules de résine à base de polypropylène dans une zone ayant une pression inférieure à la pression d'expansion,
dans laquelle les particules de résine à base de polypropylène satisfont aux conditions (a) à (c) suivantes :

(a) 100 % en poids des particules de résine à base de polypropylène contiennent, à titre de comonomère, un motif structurel composé de 1-butène en une quantité non inférieure à 0,1 % en poids et inférieure à 3 % en poids ;
(b) les particules de résine à base de polypropylène ont un MFR non inférieur à 5 g/10 minutes et non supérieur à 10 g/10 minutes ; et
(c) les particules de résine à base de polypropylène ont un point de fusion non inférieur à 146,5 °C et non supérieur à 149,4 °C ; et

dans laquelle, dans l'étape 2),
un temps de séjour allant du moment où la température à l'intérieur du récipient résistant à la pression atteint une température inférieure de 2 °C à la température d'expansion au moment où la bouillie en dispersion commence à être libérée dans la zone ayant une pression inférieure à la pression d'expansion après que la température à l'intérieur du récipient à la pression a été portée à la température d'expansion n'est pas inférieur à 5 minutes et pas supérieur à 120 minutes,
la température d'expansion n'est pas inférieure à 149 °C et pas supérieure à 158 °C, et
la pression d'expansion n'est pas inférieure à 1,0 MPa.G et pas supérieure à 3,5 MPa·G,
dans laquelle 100 % en poids des particules de résine à base de polypropylène contiennent un copolymère aléatoire de propylène/éthylène/1-butène en une quantité non inférieure à 10 % en poids et non supérieure à 35 % en poids, et
dans laquelle l'indice de fluage et le point de fusion sont déterminés comme indiqué dans la description.

9. Méthode selon la revendication 8, dans laquelle l'agent gonflant gazeux inorganique est l'air ou le dioxyde de carbone.

## FIG. 1

80.0  90.0  100.0  110.0  120.0  130.0  140.0  150.0  160.0  170.0  180.0 (℃)

## FIG. 2

POINT A (100℃)

POINT D

POINT B

POINT C

LOW-TEMPERATURE-SIDE
MELTING HEAT QUANTITY
:Ql

HIGH-TEMPERATURE-SIDE
MELTING HEAT QUANTITY
:Qh

TEMPERATURE AT LOW-TEMPERATURE-SIDE PEAK

TEMPERATURE AT HIGH-TEMPERATURE-SIDE PEAK

90.0  100.0  110.0  120.0  130.0  140.0  150.0  160.0  170.0  180.0 (℃)

# EP 3 795 622 B1

### Patent documents cited in the description

- JP 2013155386 A
- JP 2004300179 A
- WO 2006054727 A
- WO 2008139822 A
- WO 2009051035 A
- WO 2009001626 A
- JP 2010144078 A
- WO 2016060162 A
- WO 2016147919 A
- WO 2017030124 A1
- US 2015284526 A1
- US 2008153933 A1